# EUROPEAN PATENT APPLICATION

(11) **EP 4 657 271 A1**
(43) Date of publication of application: **03.12.2025**
(21) Application number: 24850459.9
(22) Date of filing: 07.02.2024
(51) Int. Cl.: G06F 16/16, G06F 16/172, G06F 16/17, G06F 8/65

(54) **SYSTEM UPGRADING INFORMATION ACQUISITION METHOD, ELECTRONIC DEVICE, AND STORAGE MEDIUM**

(30) Priority: 09.08.2023 CN 202310996701
(71) Applicant: Honor Device Co., Ltd., Shenzhen, Guangdong 518040 (CN)
(72) Inventor: WANG, Fei, Shenzhen, Guangdong 518040 (CN)
(74) Representative: Thun, Clemens
(86) International application number: PCT/CN2024/076826
(87) International publication number: WO 2025/030799

(57) **Abstract**

Embodiments of this application relate to the field of computer technologies, and in particular, to a system upgrade information obtaining method, an electronic device, and a storage medium. In this method, after the electronic device fails to perform one merge operation, the electronic device performs another merge operation. An OUC in the electronic device is enabled to obtain upgrade tracing point data in a merge process. The upgrade tracing point data includes new tracing point data. In addition, no file format configuration requirement is imposed on the upgrade tracing point data such as the new tracing point data. Moreover, the upgrade tracing point data can be obtained subsequently without parsing a formatted file. With this solution, system upgrade information can be obtained more efficiently and conveniently, and the system upgrade information can be extended.

## Description

This application claims priority to Chinese Patent Application No. 202310996701.4, filed with the China National Intellectual Property Administration on August 09, 2023 and entitled "SYSTEM UPGRADE INFORMATION OBTAINING METHOD, ELECTRONIC DEVICE, AND STORAGE MEDIUM", which is incorporated herein by reference in its entirety.

### TECHNICAL FIELD

Embodiments of this application relate to the field of computer technologies, and in particular, to a system upgrade information obtaining method, an electronic device, and a storage medium.

### BACKGROUND

Before an electronic device is delivered from a factory, a vendor of the electronic device may burn an operating system into the electronic device, so that the operating system is installed before the electronic device is delivered from the factory. Subsequently, to improve user experience, the vendor of the electronic device may need to upgrade the operating system in the electronic device.

Generally, in an operating system upgrade process, the electronic device obtains some information related to an operating system upgrade (briefly referred to as system upgrade information). After obtaining the system upgrade information, the electronic device may send the system upgrade information to a server of the vendor of the electronic device, so that the vendor of the electronic device can optimize the system upgrade process of the electronic device based on the system upgrade information; or the electronic device may display the system upgrade information to a user, so that the user can perceive the operating system upgrade process of the electronic device, and perform some operations.

Currently, in the operating system upgrade process, the electronic device records the system upgrade information in a file format. Recording the system upgrade information in the file format imposes some file format configuration requirements. Moreover, when the system upgrade information is used later, the file format further needs to be parsed, which is relatively complex and cumbersome.

### SUMMARY

Embodiments of this application provide a system upgrade information obtaining method, an electronic device, and a storage medium, so as to obtain system upgrade information more efficiently, conveniently, and directly.

To achieve the foregoing objective, the following technical solutions are used in the embodiments of this application.

According to a first aspect, a system upgrade information obtaining method is provided, where the method may be applied to an electronic device with an operating system. The electronic device may be, for example, an electronic device that has an operating system, such as a mobile phone, a personal computer, or a tablet computer. The method includes:
The electronic device runs a first operating system. Next, the electronic device runs an upgrade installation package of a second operating system. Then, the electronic device is powered off, and powered on subsequently. Next, the electronic device runs the second operating system. Later, the electronic device performs a first merge merge operation at a first time point. Next, the electronic device performs the first merge operation successfully at a second time point. The second time point is later than the first time point. Then, the electronic device starts an online update client OUC at a third time point. The third time point is later than the first time point. Next, the electronic device runs an upgrade installation package of a third operating system. Then, the electronic device is powered off, and powered on subsequently. Next, the electronic device runs the third operating system. Later, the electronic device performs a second merge operation at a fourth time point. Then, the electronic device completes the second merge operation at a fifth time point, and the second merge operation fails. The fifth time point is later than the fourth time point. The OUC is fully started at a sixth time point. The sixth time point is later than the fourth time point. Next, the electronic device performs a third merge operation at a seventh time point. The seventh time point is later than the sixth time point. Upgrade tracing point data may be generated based on a tracing point in a process in which the electronic device performs a merge operation. In addition, the foregoing merge operation (for example, the first merge operation, the second merge operation, or the third merge operation) may include: writing, to a dynamic partition of the electronic device, an upgrade file stored in a virtual dynamic partition (in a user data partition) of the electronic device.

In the method described in the first aspect, the OUC is started only after the second merge operation is performed. Given that the OUC may not be started when the electronic device performs the second merge operation, it is difficult for the OUC to obtain complete system upgrade information during the second merge operation. Based on this, after the OUC is started, the electronic device triggers execution of another merge operation, namely, the third merge operation, when the second merge operation fails. In this way, after the OUC is fully started, the electronic device can execute a complete merge operation process. Then, the OUC can directly obtain the complete system upgrade information (for example, the upgrade tracing point data) in the process of performing the merge, without parsing the file format and then obtaining the system upgrade information from a file. It can be learned that, in this manner, the system upgrade information can be obtained conveniently, efficiently, and directly.

In contrast, in some solutions, when a file (for example, a system upgrade record file) is used as a medium to obtain new system upgrade information, format processing needs to be performed on the new system upgrade information to meet a file format configuration requirement. In addition, when the new system upgrade information is subsequently used, the new system upgrade information further needs to be obtained by parsing a file format. In the first aspect, new system upgrade information does not need to be written to a system upgrade record file, and subsequently, no file needs to be parsed, and the electronic device can directly obtain the new system upgrade information.

It can be learned that in the first aspect, after the electronic device fails to perform the second merge operation, the electronic device performs another merge operation. This allows the OUC to obtain the new system upgrade information in the merge process. In addition, no file format configuration requirement is imposed on the new system upgrade information. The new system upgrade information can be obtained subsequently without parsing a formatted file. With this solution, the system upgrade information can be extended more efficiently and conveniently.

In a possible design of the first aspect, the method further includes: The OUC obtains upgrade tracing point data from a cache in a process of performing the third merge operation.

In this design manner, the OUC in the electronic device obtains the upgrade tracing point data from the cache. If a tracing point needs to be added in the merge process so that new tracing point data is generated when the merge process runs to the new tracing point, the OUC can directly obtain the new upgrade tracing point data from the cache. In other words, the OUC obtains the upgrade tracing point data by using the cache as a medium. In contrast, in some solutions, when a file (for example, a system upgrade record file) is used as a medium to transfer new tracing point data to an OUC, format processing needs to be performed on the new tracing point data to meet a file format configuration requirement. In addition, when upgrade tracing point data is subsequently used, the upgrade tracing point data further needs to be obtained by parsing a file format. In this design, with the cache serving as a medium, no format processing needs to be performed on the upgrade tracing point data, and no file format configuration requirement needs to be met. In addition, as the new tracing point data can be transferred to the OUC without performing format processing on the new tracing point data, the OUC obtains relatively raw data from the cache. In addition, when the upgrade tracing point data is subsequently used, there is no need to obtain the upgrade tracing point data by parsing a file format. The upgrade tracing point data obtained by the OUC from the cache can be directly used. In addition, given that the OUC may be started in the merge process, and later upgrade tracing point data overwrites earlier upgrade tracing point data in the cache in the merge process, that is, the upgrade tracing point data in the cache is changing, it can be learned that the OUC may fail to obtain complete tracing point data if the OUC is started in the merge process. Therefore, performing the second merge operation after the OUC is started enables the OUC to obtain upgrade tracing point data throughout a complete merge process, and the OUC can obtain the complete upgrade tracing point data.

It can be learned that in this design manner, the OUC of the electronic device can conveniently obtain add a tracing point by obtaining the upgrade tracing point data from the cache, thereby conveniently extending the upgrade tracing point data. In addition, as the upgrade tracing point data obtained by the OUC from the cache is relatively raw upgrade tracing point data, no file format requirement is imposed, the upgrade tracing point data can be obtained without parsing a formatted file, and subsequent use of the upgrade tracing point data is more convenient.

In a possible design of the first aspect, that the OUC obtains upgrade tracing point data from a cache may include: The OUC monitors a target storage area in the cache; and if a data change occurs in the target storage area, the OCU obtains upgrade tracing point data from the target storage area, where the target storage area is a storage area to which the electronic device writes the upgrade tracing point data when performing a merge operation process.

In a possible design of the first aspect, the method further includes: If the third merge operation succeeds, an update engine in the electronic device generates an upgrade result file (for example, an upgrade success file), and the OUC obtains the upgrade result file (for example, the upgrade success file), where the upgrade result file (for example, the upgrade success file) is used to indicate an upgrade success, and includes no upgrade tracing point data. In this design, as the upgrade result file includes no upgrade tracing point data, an upgrade result and the upgrade tracing point data are separated and do not exist in a same file. This makes system upgrade information in the upgrade result file relatively simple and convenient for subsequent use. When the electronic device needs only the upgrade result, the electronic device can directly obtain the upgrade result by searching for the upgrade result file. In contrast, in some solutions, a system upgrade record file generated by a mobile phone contains both upgrade result information and upgrade tracing point data. The mobile phone needs to parse the upgrade record file, filter out the upgrade tracing point data from the system upgrade record file obtained by parsing, and extract the upgrade result. In this solution, there is no need to parse an upgrade record file that contains upgrade result information and upgrade tracing point data. Instead, only an upgrade result file needs to be parsed, and an upgrade result in the upgrade result file can be directly obtained. In other words, a process in which the mobile phone obtains an upgrade result is not interfered with by upgrade tracing point data. It can be learned that in the method provided in the embodiments of this application, the upgrade result and the upgrade tracing point data are separated, so that the electronic device can directly, accurately, and efficiently obtain the system upgrade result, thereby making utilization of the system upgrade information more convenient.

In a possible design of the first aspect, that the first merge operation succeeds includes: If the first merge operation succeeds, the update engine in the electronic device generates an upgrade result file, and the OUC obtains the upgrade result file, where the upgrade result file is used to indicate an upgrade success, and the upgrade result file includes no upgrade tracing point data.

In a possible design of the first aspect, the method further includes: If the second merge operation succeeds, the update engine in the electronic device generates an upgrade result file, and the OUC obtains the upgrade result file, where the upgrade result file is used to indicate an upgrade success. In addition, that the electronic device performs a third merge operation may include: If the OUC fails to obtain an upgrade result file and the second merge operation fails, the OUC instructs the update engine in the electronic device to perform the third merge operation.

In a possible design of the first aspect, that the electronic device performs the first merge operation includes: If the electronic device successfully loads a second operating system in a first static partition, the electronic device performs the first merge operation. The method further includes: If the electronic device fails to load the second operating system in the first static partition, the electronic device loads a first operating system in a second static partition. The update engine in the electronic device generates an upgrade result file (for example, a system rollback file), and the OCU obtains the upgrade result file (for example, the system rollback file). The upgrade result file (for example, the system rollback file) is used to indicate that an operating system rollback occurs, and the upgrade result file includes no upgrade tracing point data.

In this design, if a system rollback occurs in the electronic device and running is performed based on the first static partition, the electronic device generates an upgrade result file. In this way, subsequently, it can be learned from the upgrade result file that the system upgrade on the electronic device fails, and a system rollback occurs.

In another possible design of the first aspect, that the electronic device generates an upgrade result file may include: The electronic device obtains a version number of an operating system that is running on the electronic device; and if the version number is a version number of the first operating system, the electronic device generates the upgrade result file used to indicate that an operating system rollback occurs.

In still another possible design of the first aspect, the method further includes: When the fifth time point is later than the fourth time point, after the electronic device fully starts the OUC, the OUC waits for completion (failure or success) of the second merge operation if the electronic device determines that the second merge operation is being performed. The electronic device may determine, by using upgrade tracing point data, merge data, or a preset interface, that the first merge operation is being performed.

In this design, whether a merge operation is being performed is determined by using tracing point data, merge data, or a preset interface. It can be conveniently determined whether the electronic device is performing a merge operation.

In yet another possible design of the first aspect, the electronic device may further send the obtained upgrade result file or upgrade tracing point data to a server (for example, a server of a vendor of the electronic device). In this way, a merge process of the electronic device can be remedied based on the upgrade tracing point data. Alternatively, the system upgrade result of the electronic device can be learned based on the upgrade result file.

According to a second aspect, another system upgrade information obtaining method is provided, where the method may be applied to an electronic device with an operating system. The electronic device may be, for example, an electronic device that has an operating system, such as a mobile phone, a personal computer, or a tablet computer. The method includes: The electronic device runs a fourth operating system. Next, the electronic device runs an upgrade installation package of a fifth operating system. Then, the electronic device is powered off, and powered on subsequently. Then, the electronic device runs the fifth operating system. Later, the electronic device starts an online update client OUC at an eighth time point. Next, in response to that the OUC is fully started, the electronic device performs a merge merge operation at a ninth time point. The ninth time point is later than the eighth time point. In a process in which the electronic device performs a merge operation, the OUC obtains upgrade tracing point data from a cache.

In the method of the second aspect, given that the OUC may be started in the merge process, and later upgrade tracing point data overwrites earlier upgrade tracing point data in the cache in the merge process, that is, the upgrade tracing point data in the cache is changing, it can be learned that the OUC may fail to obtain complete tracing point data if the OUC is started in the merge process. Therefore, performing a merge operation after the OUC is fully started enables the OUC to obtain upgrade tracing point data throughout a complete merge process, and the OUC can obtain the complete upgrade tracing point data.

According to a third aspect, another system upgrade information obtaining method is provided, where the method may be applied to an electronic device with an operating system. The method includes: The electronic device runs a first operating system. Next, the electronic device runs an upgrade installation package of a second operating system. Then, the electronic device is powered off, and powered on subsequently. Then, the electronic device runs the second operating system. Later, the electronic device performs a fourth merge operation. Next, the electronic device starts an online update client OUC. Then, if the electronic device fails to perform the fourth merge operation, the electronic device performs a fifth merge operation. Subsequently, in a process of performing the fifth merge operation, the OUC of the electronic device obtains upgrade tracing point data from a cache.

In a possible design of the third aspect, the method further includes: If the fifth merge operation succeeds, an update engine of the electronic device generates an upgrade result file, and the OUC of the electronic device obtains the upgrade result file (for example, an upgrade success file), where the upgrade result file (the upgrade success file) is used to indicate an upgrade success of a fifth operating system of the electronic device, and the upgrade result file includes no upgrade tracing point data. Alternatively, if the fifth merge operation fails, the electronic device stores upgrade tracing point data obtained by the OUC from the cache in a process of performing the fifth merge operation. Alternatively, if the fifth merge operation succeeds, an update engine of the electronic device generates an upgrade result file, and the OUC of the electronic device obtains the upgrade result file, where the upgrade result file is used to indicate an upgrade success, and the upgrade result file includes no upgrade tracing point data.

In another possible design of the third aspect, that the OUC of the electronic device obtains upgrade tracing point data from a cache may include: The OUC of the electronic device monitors a target storage area in the cache; and if a data change (for example, data modification or data addition) occurs in the target storage area, the OCU of the electronic device obtains the upgrade tracing point data from the target storage area. The target storage area is a storage area, in the cache, to which the electronic device writes the upgrade tracing point data in a process of performing a merge operation.

In still another possible design of the third aspect, after the electronic device fully starts the online update client OUC, the electronic device waits for completion of the fourth merge operation if the electronic device determines that the fourth merge operation is being performed. Then, if the fifth merge operation fails, the electronic device performs the fifth merge operation. The electronic device may determine, by using upgrade tracing point data, merge data, or a preset interface, that the fourth merge operation is being performed.

In yet another possible design of the third aspect, the electronic device may further send the obtained upgrade result file or upgrade tracing point data to a server (for example, a server of a vendor of the electronic device). In this way, a merge process of the electronic device can be remedied based on the upgrade tracing point data. Alternatively, the system upgrade result of the electronic device can be learned based on the upgrade result file.

According to a fourth aspect, an electronic device is provided. The electronic device includes a processor and a memory. The memory includes a first static partition, a second static partition, a dynamic partition, and a user data partition. The processor is configured to execute computer instructions stored in the memory, so the electronic device is enabled to perform the method according to any one of the first aspect and the possible designs of the first aspect; or the electronic device is enabled to perform the method according to any one of the second aspect and the possible designs of the second aspect; or the electronic device is enabled to perform the method according to any one of the third aspect and the possible designs of the third aspect.

According to a fifth aspect, a computer-readable storage medium is provided. The computer-readable storage medium stores instructions. When the computer instructions are run on an electronic device, the electronic device is enabled to perform the method according to any one of the first aspect and the possible designs of the first aspect; or the electronic device is enabled to perform the method according to any one of the second aspect and the possible designs of the second aspect; or the electronic device is enabled to perform the method according to any one of the third aspect and the possible designs of the third aspect.

According to a sixth aspect, a computer program product including instructions is provided. When the computer program product runs on an electronic device, the electronic device is enabled to perform the method according to any one of the first aspect and the possible designs of the first aspect; or the electronic device is enabled to perform the method according to any one of the second aspect and the possible designs of the second aspect; or the electronic device is enabled to perform the method according to any one of the third aspect and the possible designs of the third aspect.

For technical effects brought by any design manner of the third aspect and the fourth aspect, refer to the technical effects brought by different design manners of the first aspect and the second aspect. Details are not described herein again.

### BRIEF DESCRIPTION OF DRAWINGS

FIG. 1 is a schematic diagram of a use scenario according to an embodiment of this application;
FIG. 2 is a schematic diagram of a structure of an electronic device according to an embodiment of this application;
FIG. 3 is a schematic diagram of a software structure of an electronic device according to an embodiment of this application;
FIG. 4 is a schematic diagram of a data storage structure according to an embodiment of this application;
FIG. 5A and FIG. 5B are a schematic flowchart of a system upgrade information obtaining method according to an embodiment of this application;
FIG. 6 is a schematic flowchart of an operating system upgrade according to an embodiment of this application;
FIG. 7 is another schematic flowchart of an operating system upgrade according to an embodiment of this application;
FIG. 8 is still another schematic flowchart of an operating system upgrade according to an embodiment of this application;
FIG. 9 is yet another schematic flowchart of an operating system upgrade according to an embodiment of this application;
FIG. 10 is a schematic flowchart of a merge operation according to an embodiment of this application;
FIG. 11 is another schematic flowchart of a system upgrade information obtaining method according to an embodiment of this application;
FIG. 12A and FIG. 12B are still another schematic flowchart of a system upgrade information obtaining method according to an embodiment of this application; and
FIG. 13 is another schematic diagram of a structure of an electronic device according to an embodiment of this application.

### DESCRIPTION OF EMBODIMENTS

The following describes technical solutions in embodiments of this application with reference to the accompanying drawings in the embodiments of this application. In the descriptions of this application, unless otherwise specified, the character "/" indicates an "or" relationship between associated objects. For example, "A/B" may represent A or B. The term "and/or" in this application is merely an association relationship for describing associated objects and represents that three relationships may exist. For example, "A and/or B" may represent the following three cases: Only A exists, both A and B exist, and only B exists, where A and B may be in a singular or plural form. In addition, in the descriptions of the embodiments of this application, unless otherwise specified, "a plurality of" means two or more. "At least one of the following items" or a similar expression thereof means any combination of these items, including a single item or any combination of a plurality of items. For example, at least one of a, b, or c may represent a, b, c, a and b, a and c, b and c, or a, b, and c, where a, b, and c may be singular or plural. In addition, for ease of clearly describing the technical solutions in the embodiments of this application, in the embodiments of this application, words such as "first" and "second" are used to distinguish between same items or similar items whose functions and roles are basically the same. A person skilled in the art may understand that the words such as "first" and "second" do not limit a quantity or an execution sequence, and the words such as "first" and "second" do not indicate a definite difference.

In addition, in the embodiments of this application, words such as "example" or "for example" are used to represent giving an example, an illustration, or a description. Any embodiment or design solution described as "example" or "for example" in the embodiments of this application should not be explained as being more preferred or having more advantages than other embodiments or design solutions. Exactly, use of the words such as "example" or "for example" is intended to present related concepts in a specific manner for ease of understanding.

In an electronic device, an operating system is the most basic and the most important fundamental system software. The electronic device can be used by a user only when the operating system is installed. For example, the electronic device is a mobile phone. A mobile phone operating system such as an iPhone operating system (iPhone Operation System, IOS^{™}) or an Android (Android^{™}) system needs to be installed on the mobile phone before the mobile phone can be used by the user.

Before an electronic device is delivered from a factory, a vendor of the electronic device may burn an operating system into the electronic device, so that the operating system is installed before the electronic device is delivered from the factory. Subsequently, to improve user experience, the vendor of the electronic device may need to upgrade the operating system in the electronic device.

Generally, in an operating system upgrade process, the electronic device obtains some information related to an operating system upgrade (briefly referred to as system upgrade information). The upgrade information may include upgrade tracing point data or an upgrade result. After obtaining the system upgrade information, the electronic device may send the system upgrade information to a server of the vendor of the electronic device, so that the vendor of the electronic device can optimize a system upgrade package of the electronic device based on the system upgrade information; or the electronic device may display the system upgrade information to a user, so that the user can perceive the operating system upgrade process or the upgrade result of the electronic device; or if the operating system upgrade of the electronic device fails, the electronic device may diagnose and remedy the operating system upgrade process of the electronic device based on the system upgrade information.

In some solutions, the electronic device may record the system upgrade information by using a file format in the operating system upgrade process. For example, the electronic device may record the system upgrade information in a system upgrade record file. It can be understood that recording the upgrade information in the file format imposes some file format configuration requirements, which are relatively complex. In addition, in subsequent use, the file format further needs to be parsed, for example, the system upgrade record file further needs to be parsed, and the system upgrade information in the system upgrade record file can be obtained only after parsing.

To extend the system upgrade information, for example, to add (reduce) the system upgrade information, or for another example, to add or reduce upgrade tracing point data, the electronic device needs to additionally configure a file format and a parsing manner corresponding to the file format for the new system upgrade information. In other words, the electronic device needs to perform some processing on the new system upgrade information to meet a file format configuration requirement. In addition, with the system upgrade information recorded in the file format, the content recorded the file format can be read only after the file format is parsed during subsequent use of the system upgrade information. This is relatively complex.

For example, the system upgrade record file is in a key-value (key-value, kv) file format (briefly referred to as a kv format below). The electronic device records the system upgrade information in the kv format, imposing a kv format configuration requirement. In addition, the content recorded in the system upgrade record file can be obtained only after the kv format is further parsed during subsequent use. To add upgrade tracing point data for the electronic device, the electronic device needs to first declare a new key, and then write the added upgrade tracing point data to a value corresponding to the new key. In addition, after receiving the system upgrade record file, the server of the vendor of the electronic device also needs to correspondingly configure a parsing manner corresponding to the new key in the system upgrade record file, so as to obtain the added upgrade tracing point data. It can be learned that this manner of recording system upgrade information in a file format is not conducive to extending the system upgrade information.

In addition, the upgrade tracing point data and the upgrade result are written to the foregoing system upgrade record file. This makes the upgrade tracing point data and the upgrade result mixed together. If the electronic device only needs to obtain the upgrade result but not the upgrade tracing point data, as the system upgrade record file includes both the upgrade tracing point data and the upgrade result, the electronic device needs to first parse the file format of the upgrade record file, and then filter out the upgrade tracing point data and extract the upgrade result from the system upgrade record file obtained from parsing. In addition, as a data volume of the upgrade tracing point data may be far greater than a data volume of the upgrade result, the electronic device needs to filter the upgrade result from the upgrade tracing point data with the larger data volume. It can be learned that writing the upgrade tracing point data and the upgrade result to the system upgrade record file leads to a relatively cumbersome and time-consuming process of obtaining the upgrade result by the electronic device.

It can be learned that in the foregoing solution, the manner of obtaining the system upgrade information recorded in the file format is neither conducive to extending the system upgrade information nor conducive to accurately obtaining the system upgrade information for subsequent use.

In view of this, an embodiment of this application provides a system upgrade information obtaining method. In the method, an electronic device separates an upgrade result from upgrade tracing point data, so as to facilitate subsequent use of the system upgrade information. In addition, in the method, the electronic device obtains the upgrade tracing point data by using a cache as a medium. In other words, no file format parsing requirement is imposed on the upgrade tracing point data, and the upgrade tracing point data can be conveniently extended.

The system upgrade information obtaining method provided in this embodiment of this application may be applied to a scenario in which an electronic device 100 performs an operating system upgrade.

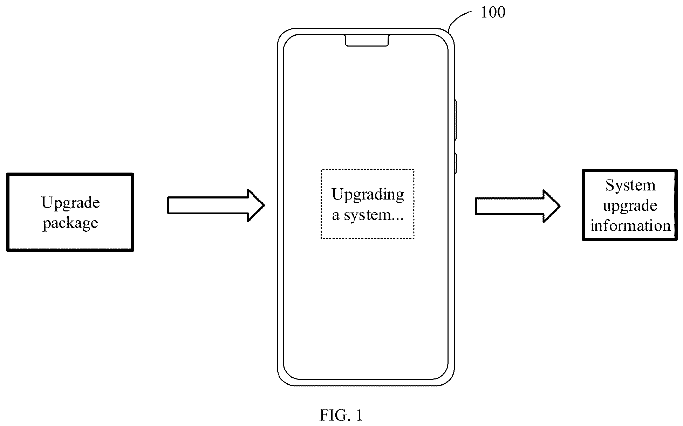

For example, referring to FIG. 1, the electronic device 100 may receive, by using an over-the-air technology (Over-the-Air Technology, OTA), a system upgrade package (briefly referred to as an upgrade package below) sent by a vendor of the electronic device 100 to the electronic device 100. Next, the electronic device 100 upgrades an operating system on the electronic device 100 based on the upgrade package. For example, the electronic device 100 downloads an upgrade package of a new version by using the OTA technology. Then, the electronic device 100 upgrades an operating system of an old version to an operating system of the new version. In an operating system upgrade process, the electronic device 100 may obtain tracing point data in the operating system upgrade process based on a preconfigured breakpoint. In addition, the electronic device may further obtain an upgrade result of the electronic device 100 after the system upgrade ends. In other words, the electronic device 100 may obtain system upgrade information in the operating system upgrade process. Then, the electronic device 100 may send the system upgrade information to a server (for example, a server of a vendor of the electronic device 100), so that the vendor of the electronic device 100 may optimize, based on the system upgrade information, an upgrade package released by the vendor; or may display the system upgrade information to a user, so that the user can perceive the upgrade process of the electronic device 100 and perform a corresponding operation (for example, restart the electronic device 100).

It should be noted that in the scenario shown in FIG. 1, the electronic device 100 may also obtain, by using a universal serial bus (universal serial bus, USB) interface, a mobile storage device (for example, a USB flash disk (USB flash disk)), or the like, an upgrade package released by the vendor of the electronic device. A manner in which the electronic device 100 obtains the upgrade package is not limited in this embodiment of this application.

It can be understood that the foregoing electronic device may be an electronic device that has an operating system, such as a mobile phone, a tablet computer, a wearable device, a smart screen, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA); or may be an Internet of Things device that has an operating system, such as a smartwatch or a smart band; or may be a vehicle-mounted device that has an operating system, such as a vehicle-mounted computer or a vehicle-mounted controller. A specific type of the electronic device is not limited in this embodiment of this application. The foregoing operating system includes but is not limited to iOS^{®}, Android^{®}, Windows^{®}, Linux^{®}, or another operating system.

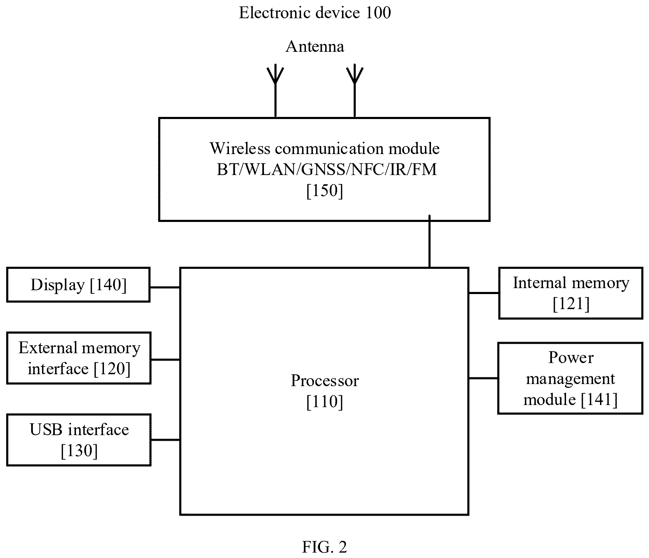

FIG. 2 shows a schematic diagram of a hardware structure of the electronic device 100.

As shown in FIG. 2, the electronic device 100 may include a processor 110, an external memory interface 120, an internal memory 121, a universal serial bus (universal serial bus, USB) interface 130, a power management module 141, an antenna, a wireless communication module 150, a display 140, and the like.

It can be understood that the structure shown in this embodiment of the present invention does not constitute a specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be further disposed in the processor 110 to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access and reduces a waiting time of the processor 110, thereby improving system efficiency.

The wireless communication module 150 may provide a solution for wireless communication that is applied to the electronic device 100 and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like.

The display 140 is configured to display an image, a video, or the like. The display 140 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a Miniled, a MicroLed, a Micro-oLed, a quantum dot light emitting diode (quantum dot light emitting diodes, OLED), or the like.

The external memory interface 120 may be configured to connect to an external memory card, for example, a Micro SD card, to expand a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code, and the executable program code includes instructions. The processor 110 runs the instructions stored in the internal memory 121, to perform various functional applications and data processing of the electronic device 100. For example, in this embodiment of this application, the processor 110 may execute the instructions stored in the internal memory 121, and the internal memory 121 may include a program storage area and a data storage area. The program storage area may store an operating system, an application required by at least one function (for example, a sound playback function or an image playback function), and the like. In addition, the internal memory 121 may include a high-speed random access memory, and may further include a nonvolatile memory, for example, at least one magnetic disk storage device, a flash memory device, or a universal flash storage (universal flash storage, UFS).

The USB interface 130 is an interface that complies with USB standard specifications, and may be specifically a Mini USB interface, a Micro USB interface, a USB Type C interface, or the like. The USB interface 130 may be configured to connect to a charger to supply electrical energy to the electronic device 100, or may be configured to transmit data between the electronic device 100 and a peripheral device, or may be configured to connect to a headset to play audio by using the headset. The interface may alternatively be configured to connect to another electronic device, for example, an AR device.

For example, the electronic device 100 may obtain an upgrade package by using the wireless communication module 150, the antenna, and the like, and write the upgrade package to the internal memory 121 or an external memory connected to the external memory interface 120. For another example, the electronic device 100 may obtain an upgrade package by using the USB interface 130, and write the upgrade package to the internal memory 121 or an external memory connected to the external memory interface 120.

For example, the electronic device 100 may perform an operating system upgrade process based on the obtained upgrade package by using the processor 110, and generate system upgrade information. Next, the electronic device 100 may send the system upgrade information to the server of the vendor of the electronic device 100 by using the wireless communication module 150 and the antenna, or by using the USB interface 130. Alternatively, the electronic device may display the system upgrade information to the user by using the display 140.

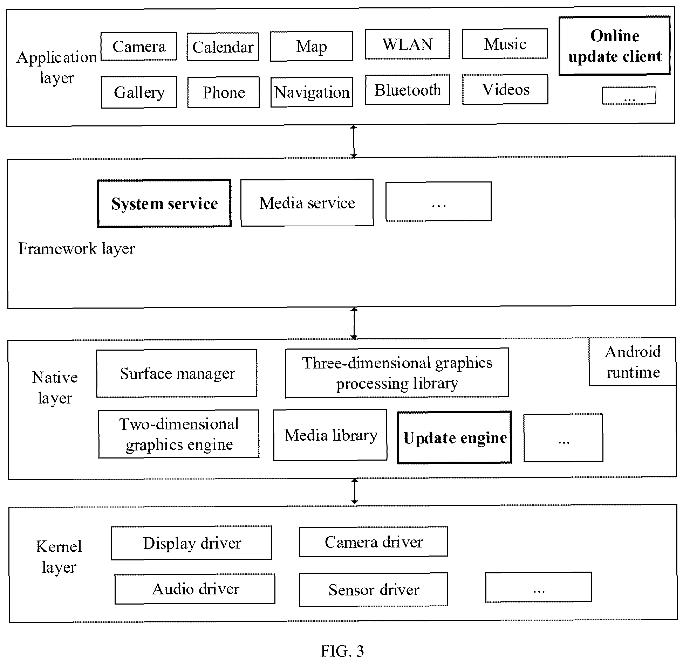

FIG. 3 is a schematic diagram of a software structure (architecture) of the electronic device 100 according to an embodiment of this application. In a layered architecture, software may be divided into several (architectural) layers, and each layer has a clear role and task. Layers communicate with each other through a software interface. In some embodiments, an Android^{™} system may be divided into four layers, which are respectively an application program layer (briefly referred to as an application (application, App) layer), an application framework layer (briefly referred to as a framework (framework, FWK) layer), a native (Native) layer, and a kernel (Kernel) layer from top to bottom. For example, as shown in FIG. 3, the electronic device 100 may include an application layer, a framework layer, a native layer, and a kernel layer.

It can be understood that the software structure shown in FIG. 3 does not constitute a specific limitation on the electronic device 100. In some other embodiments of this application, the electronic device 100 may include more or fewer architectural layers than those shown in the figure, or may combine some architectural layers, or may split some architectural layers, or the like. The Android^{™} system may also have another hierarchical division manner, for example, may be divided into an application program layer (briefly referred to as an application layer), an application framework layer, a system library, and a kernel layer. In addition, different operating systems may also have different hierarchical division manners. A person skilled in the art may specifically perform different hierarchical division on the operating systems according to actual use situations.

The application layer may include a series of application packages. As shown in FIG. 3, the application packages may include applications such as Camera, Gallery, Calendar, Phone, Map, Navigation, WLAN, Bluetooth, Music, and Videos.

The application layer may further include a system upgrade application, for example, an online update client (online update client, OUC).

For example, the electronic device may obtain an upgrade package by using the OUC. Subsequently, the electronic device may also display an upgrade result to the user by using the OUC.

The application framework layer provides an application programming interface (application programming interface, API) and a programming framework for an application at the application layer. The application framework layer includes some predefined functions. For example, the application layer may include a system service and a media service.

The system server (system server) is a process that provides many subsystem services. Each subsystem service runs in a form of a thread, waits for a request sent by an application, processes the request, and returns a result to the application. The foregoing subsystem services include, for example, a window manager service (window manager service, WMS), a notification manager service (notification manager service, NMS), an activity manager service (activity manager service, AMS), and an input manager service (input manager service, IMS).

The native layer may also be referred to as a system runtime and libraries layer, and may include a plurality of functional modules, for example, a surface manager (surface manager), a media library (Media Libraries), a three-dimensional (3D) graphics processing library (for example, OpenGL ES), a two-dimensional (2D) graphics engine (for example, an SGL), and an Android^{™} runtime (Android^{™} runtime, ART).

The surface manager is configured to manage a display subsystem, and provide 2D and 3D layer fusion for a plurality of applications. The media library supports playback and recording in a plurality of common audio and video formats, a still image file, and the like. The media library may support a plurality of audio and video coding formats, such as MPEG4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D graphics drawing.

Android^{™} Runtime includes a kernel library and a virtual machine. The Android^{™} Runtime is responsible for scheduling and management the Android system.

The kernel library includes two parts: one part is a functional function that needs to be invoked by a java language, and the other part is a kernel library of Android.

The application program layer and the application framework layer run in the virtual machine. The virtual machine executes java files at the application program layer and the application framework layer as binary files. The virtual machine is configured to perform functions such as object lifecycle management, stack management, thread management, security and exception management, and garbage collection.

The native layer may further include an update engine (update_engine). For example, the electronic device may perform, by using the update engine, virtual A/B installation or a merge process in a system upgrade process.

A kernel driver layer may also be referred to as a kernel layer, and is a layer between hardware and software. The kernel layer includes at least a display driver, a camera driver, an audio driver, and a sensor driver.

For example, the electronic device may start the foregoing OUC or update engine by using the system service.

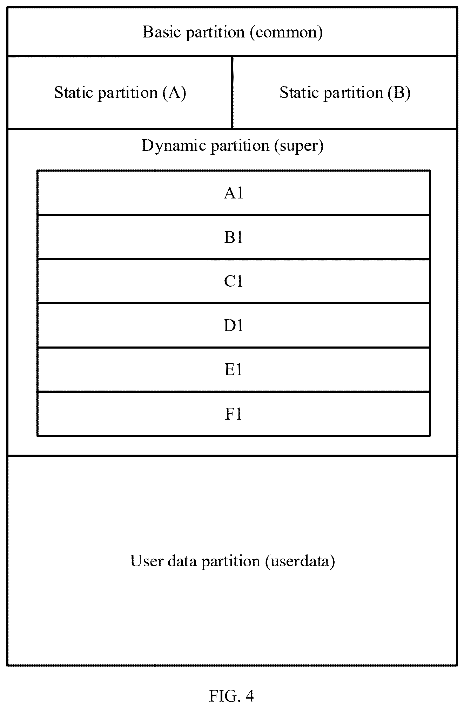

An Android^{™} system is used as an example. FIG. 4 is a schematic diagram of a data storage structure according to an embodiment of this application. As shown in FIG. 4, a data storage area of the Android system includes a basic partition (common), a static partition (A), a static partition (B), a dynamic partition (super), and a user data partition (userdata).

The user data partition (userdata) is configured to store personal data of a user, for example, personal data such as an APP installed by the user personally, and a picture, a document, and a video stored by the user personally. Data stored in the basic part is system data that is not used for upgrading the operating system. A structure of the static partition (A) and a structure of the static partition (B) correspond to each other, and sub-partition names are distinguished from each other by using suffixes _a and _b. For example, the static partition (A) includes boot_a, vendor_boot_a, dtbo_a, and vbmeta_a, and the static partition (B) includes boot_b, vendor_boot_b, dtbo_b, and vbmeta_b. The dynamic partition (Super) includes a plurality of sub-partitions, for example, an S1 partition that records Al data, an S2 partition that records B1 data, an S3 partition that records C1 data, an S4 partition that records D1 data, an S5 partition that records E1 data, and an S6 partition that records F1 data. It can be understood that when the electronic device performs an operating system upgrade, files (data) in the static partition and the dynamic partition need to be updated, while files in the basic partition and the user data partition do not need to be updated.

When the electronic device boots, the electronic device boots from a static partition. For example, if the electronic device boots from the static partition (A), the basic partition (common), the static partition (A), and the dynamic partition (super) are sequentially loaded. For another example, if the electronic device boots from the static partition (B), the basic partition (common), the static partition (B), and the dynamic partition (super) are sequentially loaded.

A universal flash storage (Universal Flash Storage, UFS) in a master boot record (Master Boot Record, MBR) format is used as an example. A description of a device boot sequence (for example, a mobile phone boot sequence) is stored in an MBR (a master boot sector, the first sector of the UFS, that is, cylinder 0 head 0 sector 1 in terms of a C/H/S address) of the UFS. The device boot sequence may be used to indicate booting from the static partition (A) (a boot sequence flag is A) or booting from the static partition (B) (a boot sequence flag is B). After the device boots, the device first reads the device boot sequence from the MBR of the UFS, and start (load) each data partition in sequence according to the read device boot sequence. The MBR is usually recorded in the basic partition (common). Certainly, the MBR may alternatively be recorded at different locations on different platforms. This is not specifically limited in this embodiment of this application.

It can be understood that the division manner of the data partitions shown in FIG. 4 does not constitute a specific limitation on a data storage partition of the electronic device 100. In some other embodiments of this application, different forms of division may be performed on the data storage partition of the electronic device 100. The electronic device 100 may include more or fewer data partitions than those shown in the figure, or combine some data partitions, or split some data partitions, or the like. Specifically, a division manner of the data storage partition of the electronic device 100 may be designed according to an actual use situation. This is not limited in this embodiment of this application.

The following describes the technical solutions provided in the embodiments of this application by using an example in which the electronic device 100 is a mobile phone in the use scenario shown in FIG. 1.

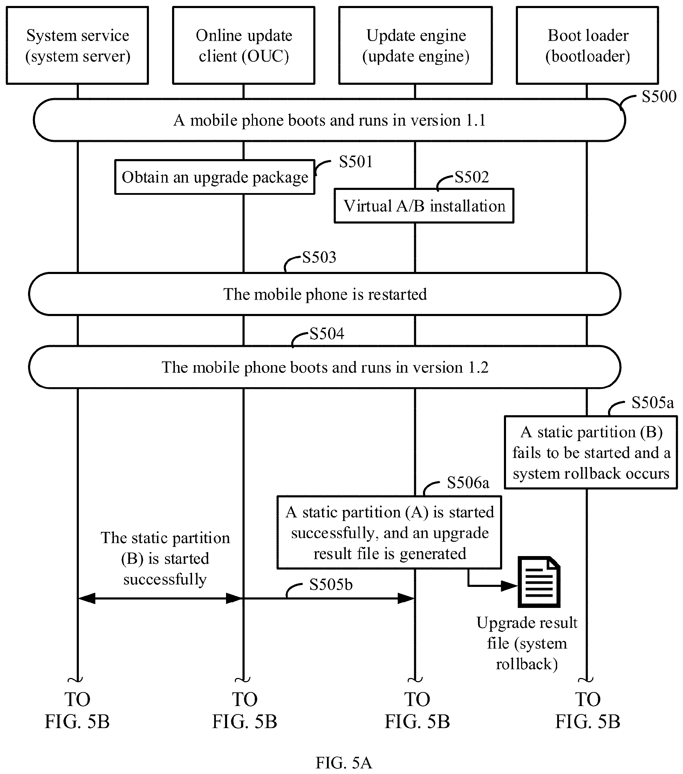

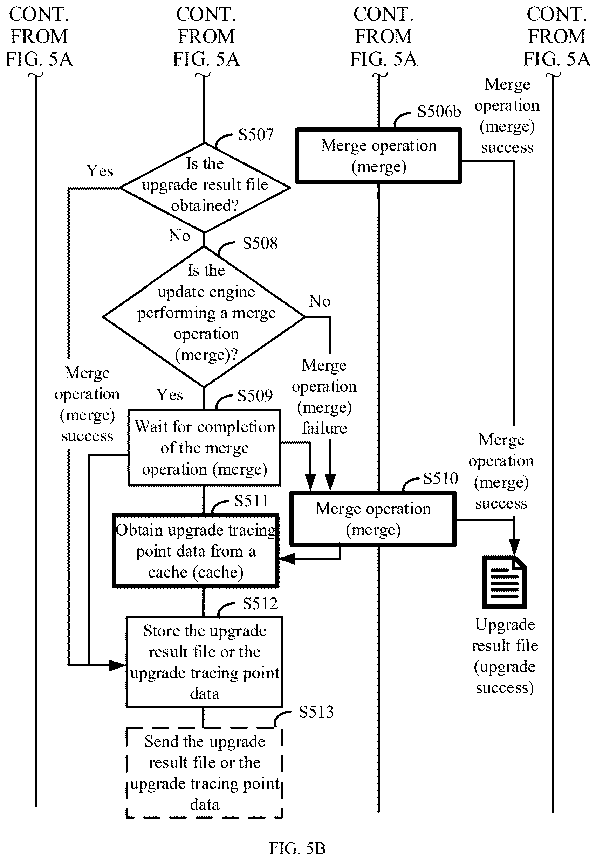

It is assumed that an operating system of an old version (for example, version 1.1) is running on the mobile phone, and needs to be upgraded to an operating system of a new version (for example, version 1.2). The mobile phone may upgrade the operating system based on a procedure shown in FIG. 5A and FIG. 5B, and obtain system upgrade information.

For example, referring to FIG. 5A and FIG. 5B, a system upgrade information obtaining method provided in an embodiment of this application may include steps S500-S512.

S500: The mobile phone loads a basic partition (common) and a static partition (A), and boots from the static partition (A), so as to boot and run in version 1.1.

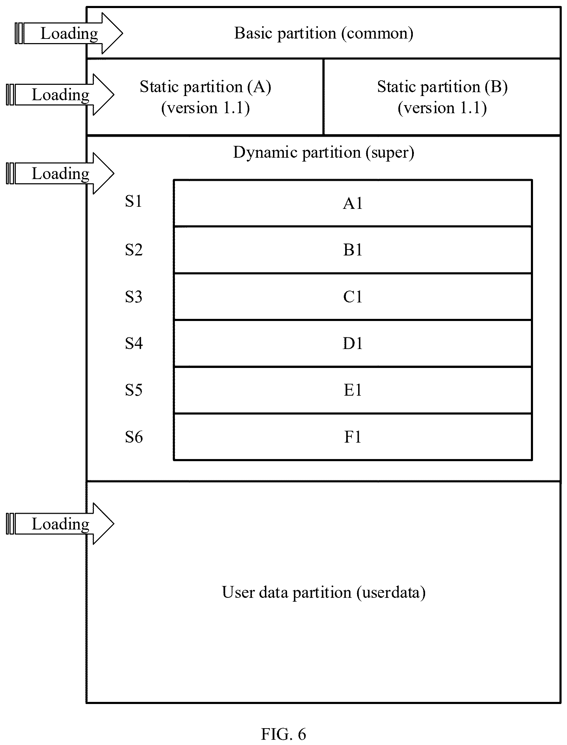

For example, referring to FIG. 6, the mobile phone may sequentially load the basic partition (common), the static partition (A), a dynamic partition, and a user data partition to boot from the static partition (A). In other words, the mobile phone boots and runs by using the operating system of the old version, that is, an operating system of version 1.1.

It can be understood that, as the mobile phone has not obtained an upgrade package at this time, the static partition (A), the static partition (B), and the dynamic partition of the mobile phone store the operating system of the old version, for example, the operating system of version 1.1. Because both the static partition (A) and the static partition (B) of the mobile phone store the operating system of the old version, the mobile phone may also start the operating system of version 1.1 from the static partition (B). For ease of description, the following provides a description by using an example in which the mobile phone boots from the static partition (A) and runs the operating system of version 1.1.

S501: The OUC obtains an upgrade package.

In some embodiments, the OUC may periodically initiate a package search request to a package search server, where the package search request includes a version number (for example, version 1.1) of an operating system currently run on the mobile phone; the package search server determines, by retrieval based on the operating system version number in the package search request, whether there is currently an operating system upgrade package of a new version (for example, version 1.2); when there is an operating system upgrade package of a new version, the package search server feeds back a download address of the upgrade package (for example, an operating system upgrade package for upgrade from version 1.1 to version 1.2) to the device; and the device downloads the upgrade package based on the download address of the upgrade package.

The upgrade package may be a full system upgrade package or a differential system upgrade package. The full upgrade package may be understood as a system upgrade package that includes full data of version 1.2. The differential system upgrade package may be understood as a system upgrade package that includes differential data between version 1.2 and version 1.1. It is assumed that a dynamic partition of version 1.2 includes A2, B1, C1, D2, E1, and F1; and a dynamic partition of version 1.1 includes A1, B1, C1, D1, E1, and F1. The full system upgrade package may be a system upgrade package that includes A2, B1, C1, D2, E1, and F1. The differential system upgrade package may be a system upgrade package that includes A2 and D2. Specifically, a type of an upgrade package may be designed according to an actual use requirement. This is not limited in this embodiment of this application.

In some embodiments, the OUC may alternatively obtain an upgrade package by using the USB interface of the mobile phone. In addition, the OUC may alternatively obtain, by using the external memory interface, an upgrade package installed on a storage medium (for example, a USB flash disk), or the like. Specifically, a manner of obtaining an upgrade package by the OUC may be designed according to an actual use requirement. This is not limited in this embodiment of this application.

S502: The update engine performs virtual A/B installation based on the upgrade package.

It can be understood that, because the mobile phone is running at this time, the mobile phone cannot modify a file that is being used in a data partition. In other words, if the mobile phone boots from the static partition (A), the update engine may write static partition data for version 1.2 included in the upgrade package to the static partition (B). If the mobile phone boots from the static partition (B), the update engine may write static partition data for version 1.2 included in the upgrade package to the static partition (A).

In addition, for dynamic partition data for version 1.2 included in the upgrade package, the update engine may create a virtual dynamic partition in the user data partition; and write the dynamic partition data for version 1.2 included in the upgrade package to the virtual dynamic partition.

Then, the update engine modifies a mobile phone boot sequence. It can be understood that the mobile phone boot sequence is a sequence of starting (loading) data partitions by the mobile phone.

For example, the OUC may instruct, by invoking a multipayloads interface, the update engine (update_engine) to perform virtual A/B installation. Then, after the virtual A/B installation is complete, the update_engine calls back to the OUC by using the multipayloads interface to deliver a virtual A/B installation result (for example, a virtual A/B installation success or a virtual A/B installation failure).

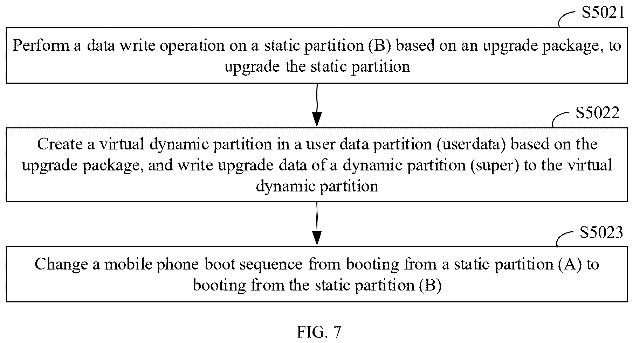

In some embodiments, referring to FIG. 7, step S502 may include steps S5021-S5023.

S5021: The update engine performs a data write operation on the static partition (B) based on the upgrade package, to upgrade the static partition (B).

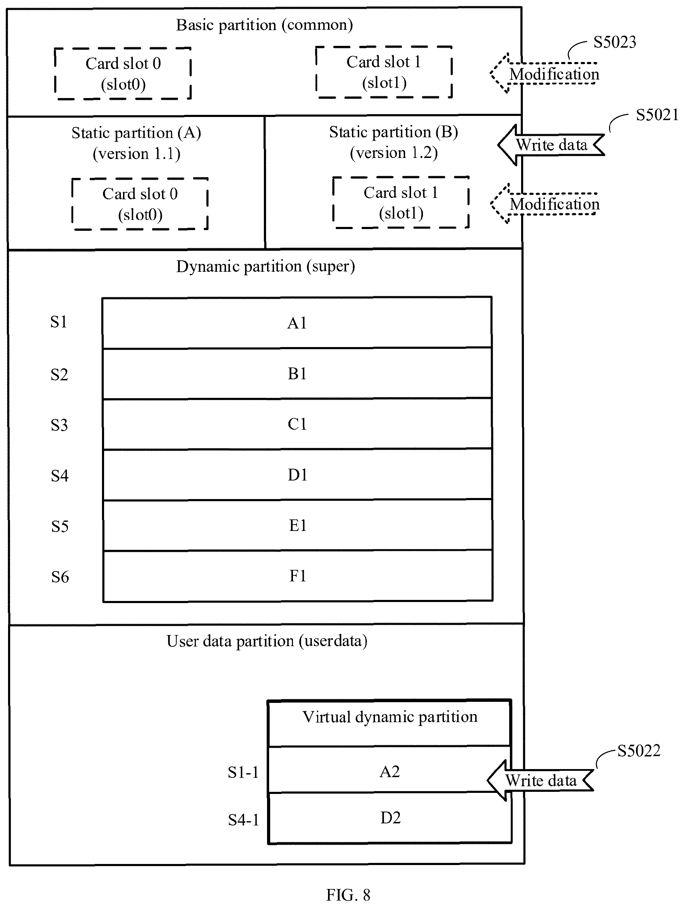

For example, referring to FIG. 8, if the upgrade package for upgrade from version 1.1 to version 1.2 includes full data in the static partition of version 1.2, the update engine uses the data in the static partition of version 1.2 to overwrite that in the static partition (B), so that the data in the static partition (B) is updated to the static partition data for version 1.2.

It can be understood that, if the mobile phone runs the operating system of version 1.1 from the static partition (B) at this time, upgrade data in the static partition of version 1.2 that is included in the upgrade package may also be written to the static partition (A). This is not limited in this embodiment of this application.

S5022: The update engine creates a virtual dynamic partition in the user data partition (userdata) based on the upgrade package, and writes upgrade data in the dynamic partition (super) to the virtual dynamic partition.

For example, if the upgrade package includes full data in the dynamic partition (super) of version 1.2, the update engine writes the full data in the dynamic partition (super) of version 1.2 to the user data partition, and creates a virtual dynamic partition for version 1.2 in the user data partition. The virtual dynamic partition includes the full data in the dynamic partition of version 1.2.

In some embodiments, for virtual A/B installation by the update engine, a differential upgrade manner is used for the dynamic partition (super). In an upgrade process, the virtual dynamic partition in the user data partition (userdata) stores not all files in the dynamic partition (super) of the new version after upgrade, but an upgrade result, obtained after upgrade, of data that needs to be updated in the dynamic partition (super) of the old version. That is, the upgrade data in the dynamic partition (super) is stored in the virtual dynamic partition of the user data partition (userdata).

In some embodiments, for virtual A/B installation by the update engine, the update engine may also implement incremental upgrade of the dynamic partition (super) based on a snapshot (snapshot) technology. Specifically, in the virtual dynamic partition of the user data partition (userdata), the upgrade data in the dynamic partition (super) is stored by using a Copy-On-Write (Copy-On-Write, COW) file. In this way, when the virtual dynamic partition is subsequently loaded, the mobile phone may load the COW file in the user data partition and a file in the dynamic partition by using snapshot to load the virtual dynamic partition.

For example, refer back to FIG. 8. It is assumed that, compared to version 1.1, only data A1 in S1 and data D1 in S4 in the dynamic partition (super) are updated in version 1.2, for example, A1 is updated to A2, and D1 is updated to D2. In other words, for version 1.1, data in S1 in the dynamic partition is A1, and data in S4 in the dynamic partition is D1; and for version 1.2, data in S1 in the dynamic partition is A2, and data in S4 in the dynamic partition is D2.

Based on this, during creation of a virtual dynamic partition in the user data partition, the update engine may create the virtual dynamic partition only for the dynamic partitions S1 and S4 in the user data partition, to save space of the user data partition. In addition, the update engine may set an address of the data A2 to S1-1 corresponding to an address S1 of A1; and set an address of the data D2 to S4-1 corresponding to an address S4 of D1. Then, the update engine may load A2, B1, C1, D2, E1, and F1 by using snapshot during subsequent use of version 1.2, to run the operating system of version 1.2.

S5023: The update engine changes the mobile phone boot sequence from booting from the static partition (A) to booting from the static partition (B).

For example, the update engine may change a boot sequence identifier of a master boot record (Master Boot Record, MBR) from A to B. After the mobile phone is powered on, when the mobile phone learns by reading that the boot sequence identifier is A, the mobile phone boots from the static partition (A), and loads the static partition (A) during booting; or when the mobile phone learns by reading that the boot sequence identifier is B, the mobile phone boots from the static partition (B), and loads the static partition (B) during booting.

In some embodiments, step S5023 may further include: The update engine (update engine) modifies a card slot (slot).

For example, referring back to FIG. 8, a card slot 0 (slot0) corresponding to the static partition (A) and a card slot 1 (slot1) corresponding to the static partition (B) may be included in the basic partition or the static partition. slot0 and slot1 are used to store a partition table of the super partition.

For example, in the description of the device boot sequence in the MBR of the UFS, slot0 is configured to correspond to booting from the static partition (A), and slot1 is configured to correspond to booting from the static partition (B). During booting of the mobile phone, the mobile phone chooses to obtain partition information of the super partition from either slot0 or slot1 based on different static partitions used for booting. For example, the mobile phone currently boots from the static partition (A). When loading the dynamic partition (super), the mobile phone reads slot0 to obtain a sub-partition address of the dynamic partition (super) (for example, loading the dynamic partition in a manner of loading S1, S2, S3, S4, S5, and S6). When the mobile phone boots from the static partition B and loads the super partition, the mobile phone reads slot1 to obtain a sub-partition address of the dynamic partition (super) (for example, loading the dynamic partition in a manner of loading S1-1, S2, S3, S4-1, S5, and S6).

S503: The mobile phone is restarted.

In some embodiments, after step S510 in which the update engine completes virtual A/B installation (for example, after the mobile phone boot sequence is modified), the system service (system server) on the mobile phone may also instruct the mobile phone to power off, and the mobile phone exits a current operating system. Next, the mobile phone turns on a power supply, and is powered on.

In some embodiments, after step S520, the mobile phone does not need to be restarted immediately, but the user may autonomously select a restart occasion. In this way, the operating system upgrade process does not affect a normal mobile phone operation of the user. This greatly improves user experience. For example, the mobile phone may prompt the user, in a form such as a pop-up window or a notification message, that the virtual A/B installation on the mobile phone is complete. Then, the mobile phone performs restart in response to a restart operation performed by the user on the mobile phone.

S504: The mobile phone sequentially loads the basic partition, the static partition (B), the dynamic partition, and the virtual dynamic partition in the user data partition, so that the mobile phone boots and runs in version 1.2. Then, the mobile phone performs S505a-S506a, or performs S505b-506b and subsequent steps.

In some embodiments, the basic partition and the static partition (B) may be loaded by a boot loader (bootloader) on the mobile phone. Next, the bootloader reads slot1 corresponding to the static partition (B) and extracts, based on slot1 by using snapshot, a corresponding file from the dynamic partition or the COW file in the virtual dynamic partition for loading.

The boot loader (bootloader) may be a code program that is cured on a processor of the mobile phone. The program may be used to load a data partition, and sequentially load functional modules at different software architectural layers of the mobile phone. In this way, the mobile phone can be powered on, so that the mobile phone can enter a user interaction interface. For example, the bootloader may first load a functional module (for example, the display driver, the audio driver, or an operating system kernel) at the kernel layer. Then, the kernel layer (for example, the operating system kernel) loads a functional module (for example, the update engine or the surface manager) at the native layer. Next, the kernel layer (for example, the operating system kernel) loads a functional module (for example, the system service or the media service) at the framework layer. Then, the kernel layer (for example, the operating system kernel) loads a functional module (for example, the Camera application or the OUC application) at the application layer. It can be learned that after the mobile phone is restarted, the update engine on the mobile phone may be started before the OUC.

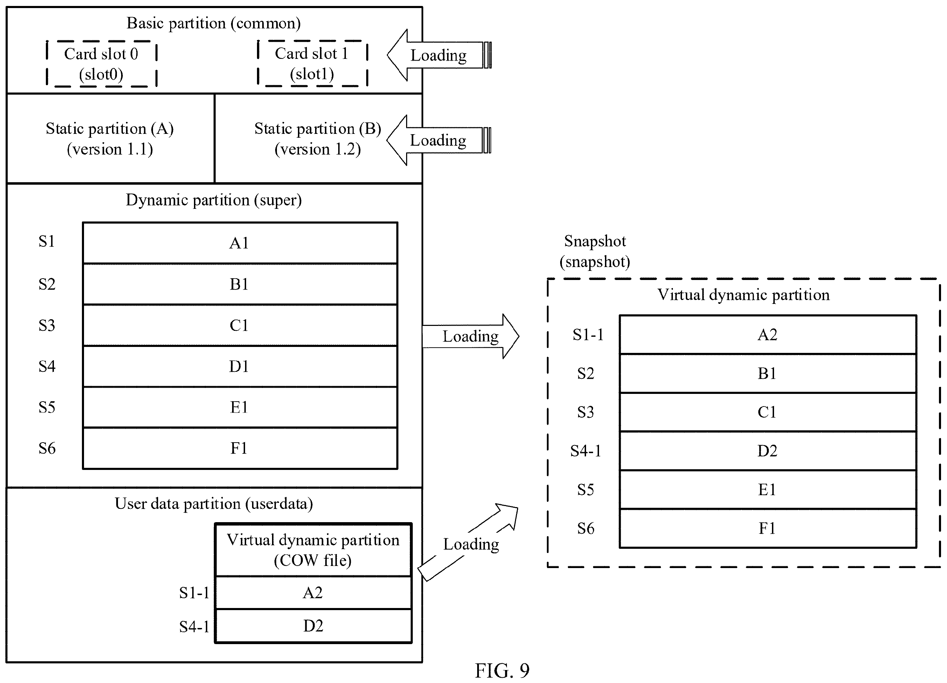

For example, referring to FIG. 9, it is assumed that a slot is in the basic partition of the mobile phone. The bootloader reads the boot sequence identifier in the MBR. For example, it is learned by reading that the mobile phone boots from the static partition (B). Then, the bootloader loads the basic partition and reads slot1 from the loaded basic partition. Next, the bootloader loads the static partition (B). Then, after the bootloader fully loads the static partition (B), the bootloader loads, based on slot1 by using snapshot, the dynamic partition and the COW file in the user data partition, to load the virtual dynamic partition. After the virtual dynamic partition is loaded, the bootloader loads the user data partition.

For example, after the bootloader loads the data partitions and loads and starts the functional modules at the software architectural layers, the mobile phone enters the user interaction interface. In this case, a boot flag bit of the mobile phone indicates "boot success". For example, a value of boot_complete is 1.

S505a: If the mobile phone fails to boot from the static partition (B), the boot loader (bootloader) performs a system rollback and boots from the static partition (A).

In some embodiments, the boot loader (bootloader) may record a quantity of times of booting from the static partition (B). If the boot loader finds that the quantity of times of booting from the static partition (B) is greater than or equal to a preset threshold (for example, three times or five times), but the booting from the static partition (B) fails, the boot loader performs a system rollback and boots from the static partition (A). In other words, the boot loader (bootloader) sequentially loads the basic partition, the static partition (A), the dynamic partition (super), and the user data partition. In this way, the mobile phone boots by using an operating system corresponding to the static partition (A) (for example, the operating system of version 1.1).

It can be understood that, when the mobile phone boots from the static partition (B), the booting may fail due to a plurality of reasons, that is, the mobile phone cannot run the operating system of version 1.2. Therefore, after the mobile phone attempts to boot from the static partition (B) for many times but fails, the mobile phone performs a system rollback and boots from the static partition (A), that is, the mobile phone runs the operating system of version 1.1. In the foregoing virtual A/B installation process, data related to the operating system of version 1.1 is not modified. Therefore, the mobile phone can still boot by using the operating system of version 1.1. In this way, even if the operating system of the mobile phone fails to be updated, the mobile phone can still enter the user interaction interface by using a non-updated operating system (for example, version 1.1), without affecting normal use of the mobile phone by the user.

S506a: After the mobile phone boots from the static partition (A) successfully, the update engine (update engine) generates an upgrade result file including system rollback information.

For example, after the mobile phone boots from the static partition (A), the bootloader modifies the boot flag bit of the mobile phone. Next, after the update engine (update engine) is started, the update engine (update engine) can generate an upgrade result file including system rollback information. When the upgrade result file includes the system rollback information, the upgrade result file is used to indicate to the OUC that the operating system of the mobile phone fails to be upgraded (the virtual A/B installation fails), and an operating system rollback occurs. In addition, because the virtual A/B installation of the mobile phone fails, the mobile phone runs in the operating system of version 1.1, and the update engine (update engine) does not need or does not execute a merge process.

In some embodiments, the upgrade result file may include an upgrade result flag bit. The upgrade result flag bit may indicate a success or failure of an operating system upgrade by using a different value. For example, if a value of the upgrade result flag bit is "50", it indicates that a system rollback occurs in the operating system of the mobile phone. In other words, in some embodiments, if a system rollback occurs on the mobile phone, the boot loader sets the value of the upgrade result flag bit to "50", to indicate that a system rollback occurs on the mobile phone.

In some embodiments, after being started, the update engine (update engine) may obtain a number of a version currently running on the mobile phone. If it is found that the number of the version currently running on the mobile phone is a version number of an old operating system, an upgrade result file including system rollback information is generated.

It can be understood that, if the mobile phone experiences a system rollback and runs by using the static partition (A), the boot loader (boot loader) generates an upgrade result file (including system rollback information). In addition, because the mobile phone runs by using the static partition (A), the update engine (update engine) neither performs merge nor generates upgrade tracing point data. In this way, the OUC can subsequently learn by using the upgrade result file that a virtual A/B upgrade on the mobile phone fails, and a system rollback occurs.

S505b: If the mobile phone boots from the static partition (B) successfully, the system service starts the update engine (update engine) and the OUC.

In some embodiments, after the system service (system server) is loaded and started successfully, the system service may search for the boot flag bit of the mobile phone. If the boot flag bit of the mobile phone found by searching indicates a boot success, the system service (system server) instructs to start the update engine (update engine) and the OUC, so that the update engine (update engine) performs a merge (merge) operation.

A tracing point may also be referred to as a tracking point. It indicates a breakpoint, added to a running process of a program, at which running of the program is suspended. Data generated by the program when the program runs to the breakpoint is output subsequently. For example, when the update engine performs merge, if the update engine runs to a preset tracing point, the update engine suspends the merge, and outputs upgrade tracing point data.

In the embodiments, after the update engine (update engine) is started, the update engine (update engine) checks a merge status of the COW file in the user data partition (that is, a merge status of merging the COW file in the user data partition into the dynamic partition (super)), and performs a merge operation.

For example, a metadata partition (/metadata) of the basic partition (common) may record merge status information. The merge status information includes "merged (merged)" or "wait for merge (wait for merge)". The merge status information is used to indicate whether a COW file that needs to be merged into the dynamic partition (super) exists in the current user data partition.

Specifically, the merge status information includes an overall identifier for the dynamic partition (super) and a sub-partition identifier for each sub-partition. When the overall identifier is "merged (merged)", it indicates that a merge operation needs to be performed on none of sub-partitions in the dynamic partition (super). When the overall identifier is "wait for merge (wait for merge)", it indicates that a merge operation needs to be performed on one or more sub-partitions in the dynamic partition (super). When the sub-partition identifier is "merged (merged)", it indicates that no merge operation needs to be performed on the sub-partition. When the sub-partition identifier is "wait for merge (wait for merge)", it indicates that a merge operation needs to be performed on the sub-partition.

If the update engine determines, by using the merge status information, that a merge operation needs to be performed on the dynamic partition (super), the update engine may execute a merge process, and merge the COW file in the user data partition into a sub-partition of the dynamic partition corresponding to the COW file.

S506b: The update engine (update engine) performs a merge (merge) operation.

It can be understood that a trigger occasion at which the update engine (update engine) performs the merge operation may include a start success of the update engine. In other words, after the update engine is successfully started, the update engine checks the merge status information, and performs the merge operation based on the merge status information. It can be understood that, for the update engine, after the update engine is successfully started, the update engine may actively perform the merge operation.

In some embodiments, the merge operation means that in an operating system upgrade process, a dynamic partition (super) upgrade file (for example, a COW file) stored in the virtual dynamic partition on the user data partition (userdata) is written to the dynamic partition (super), so that a file in the dynamic partition (super) completes data update, so that the mobile phone does not need to load the dynamic partition (super) and the virtual dynamic partition at next booting, and the mobile phone booting can be completed only by loading the dynamic partition (super).

For example, the update engine (update engine) writes upgrade data in the COW file in the user data partition (userdata) to a corresponding address in the dynamic partition (super), so that all data in the dynamic partition (super) is data of a new version after upgrade. Subsequently, after the update engine (update engine) performs the merge operation successfully, the update engine (update engine) deletes the COW file in the user data partition (userdata), and releases storage space of the user data partition (userdata). In addition, the merge status information in the metadata (/metadata) of the basic partition (common) is changed from "wait for merge (wait for merge)" to "merged (merged)".

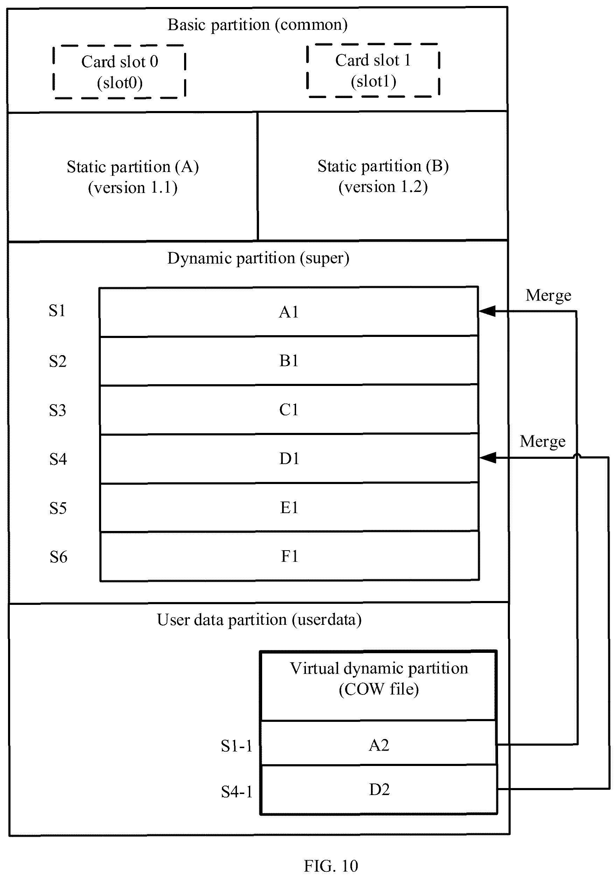

For example, referring to FIG. 10, the update engine (update engine) writes upgrade data (such as A2 and D2) in the COW file in the user data partition (userdata) to an address corresponding to the dynamic partition (super). For example, the upgrade data in the COW file in the user data partition (userdata) is A2 whose address is S1-1. The address S1-1 corresponds to an address S1 in the dynamic partition (super). For another example, the upgrade data in the COW file in the user data partition (userdata) is D2 whose address is S4-1. The address S4-1 corresponds to an address S4 in the dynamic partition (super). The update engine (update engine) uses the upgrade data A2 to overwrite A1 at the address S1, that is, changes A1 in the dynamic partition (super) to A2. In addition, the update engine (update engine) uses the upgrade data D2 to overwrite D1 at the address S4, that is, changes D1 in the dynamic partition (super) to D2.

In some embodiments, the update engine (update engine) generates and outputs upgrade tracing point data based on a preset tracing point in a merge process.

For example, if the update engine runs to the preset tracing point in the merge process, the update engine suspends the merge process. Next, after the merge process is suspended, the update engine reads merge data in the merge process (for example, a variable value, a location of an upgrade file, integrity of the upgrade file, a file verification bit, and a status of the upgrade file), generates upgrade tracing point data based on the merge data, and stores the upgrade tracing point data in a cache (cache). Then, the OUC may obtain the upgrade tracing point data from the cache (cache).

In some embodiments, in a merge process performed by the update engine, upgrade tracing point data generated by the update engine later overwrites upgrade tracing point data generated by the update engine earlier. It is assumed that some upgrade tracing point data is a file verification bit. The update engine uses a file verification bit generated later to overwrite a file verification bit generated earlier. In other words, the file verification bit generated earlier is deleted from the cache.

In some embodiments, the update engine (update engine) generates an upgrade result (for example, generates an upgrade result file including upgrade success information) after the merge ends and succeeds.

In some embodiments, the upgrade result file may include an upgrade result flag bit. The upgrade result flag bit may indicate a success or failure of an operating system upgrade by using a different value. For example, if the value of the upgrade result flag bit is 0, it may indicate that the operating system upgrade of the mobile phone succeeds. In other words, in some embodiments, if the update engine (update engine) performs the merge successfully, the update engine may set the value of the upgrade result flag bit to "0" to represent that the merge process on the mobile phone succeeds, and a file related to the system upgrade in the user data partition has been synchronized to the dynamic partition.

It should be noted that, when the update engine performs the merge successfully, the upgrade result file generated by the update engine includes only the upgrade success information, and does not include upgrade tracing point data. In addition, because the OUC obtains the upgrade tracing point data from the cache, the upgrade result file is obtained in a file form. In other words, the upgrade tracing point data and upgrade result information are separated.

It can be learned that, according to the system upgrade information obtaining method provided in this embodiment of this application, upgrade result information and upgrade tracing point data that are included in an upgrade result file are separated, and are not mixed together.

In contrast, in some solutions, a system upgrade record file generated by a mobile phone contains both upgrade result information and upgrade tracing point data, which can be obtained by parsing the system upgrade file. In this embodiment of this application, because the upgrade result information is separated from the upgrade tracing point data, if the mobile phone concerns only the upgrade result but not the upgrade tracing point data in this case, the mobile phone can directly search for the upgrade result file to obtain the upgrade result of the mobile phone (for example, an upgrade success or a system rollback), and the mobile phone does not need to obtain the upgrade tracing point data. This makes system upgrade information on the mobile phone relatively simple and convenient for subsequent use. When the mobile phone needs only the upgrade result, the mobile phone can directly obtain the upgrade result by searching for the upgrade result file, without being affected by the upgrade tracing point data. Moreover, in contrast, in some solutions, a system upgrade record file generated by a mobile phone contains both upgrade result information and upgrade tracing point data. The mobile phone needs to parse the upgrade record file, filter out the upgrade tracing point data from the system upgrade record file obtained by parsing, and extract the upgrade result. In this solution, there is no need to parse an upgrade record file that contains upgrade result information and upgrade tracing point data. Instead, only the upgrade result file needs to be parsed, and the upgrade result of the mobile phone can be directly obtained. In other words, a process in which the mobile phone obtains an upgrade result is not interfered with by upgrade tracing point data.

It can be learned that in the method provided in this embodiment of this application, the upgrade result and the upgrade tracing point data are separated, so that the mobile phone can directly, accurately, and efficiently obtain the system upgrade result, thereby making utilization of the system upgrade information more convenient.

In some embodiments, the mobile phone may further separate the upgrade result file including the upgrade success information from the upgrade result file including the system rollback information. For example, an upgrade success file and a system rollback file are obtained by separation, where the upgrade success file is used to record the upgrade success information, and the system rollback file is used to record the system rollback information. In this way, information in the upgrade result file can be streamlined.

In some embodiments, the update engine (update engine) further deletes the upgrade file (for example, the virtual dynamic partition in the user data partition) after the merge succeeds, so that storage space of the user data partition (userdata) can be released.

In some embodiments, after the update engine (update engine) performs the merge (merge) operation successfully, the update engine can delete an installation file, for example, the virtual dynamic partition in the user data partition (user date). In this way, the mobile phone can run by using an updated and complete operating system (for example, version 1.2).

For example, after the update engine (update engine) performs the merge (merge) operation successfully, the update engine (update engine) deletes the COW file in the user data partition. It should be noted that after the update engine (update engine) fails to perform the merge (merge) operation, the update engine does not delete the installation file. Because the merge fails at this time, super of the mobile phone does not contain complete and updated operating system data (for example, A2 and D2 above). In this case, the mobile phone runs an operating system in a form of a dynamic partition and a virtual dynamic partition. If the foregoing installation file is deleted, the mobile phone may crash, and consequently, the mobile phone cannot run the operating system of version 1.2 normally.

S507: After the OUC is started successfully, the OUC obtains an upgrade result file. If the OUC fails to obtain the upgrade result file, S508 is performed. If the OUC obtains the upgrade result file, step S512 is performed.

In some embodiments, the OUC may attempt to obtain the upgrade result file. If the OUC obtains the upgrade result file, the OUC can learn that the update engine (update engine) on the mobile phone has completed the merge and the merge succeeds, that is, the system upgrade succeeds. In other words, no ongoing merge is performed by the update engine (update engine) on the mobile phone.

In this way, after the OUC obtains the upgrade result file, the OUC may prompt, based on the upgrade result file, that the operating system upgrade of the mobile phone succeeds; or send the upgrade result file to a server; or the like.

If the OUC does not obtain the upgrade result file, the update engine (update engine) may be performing a merge process, or the merge process may have been completed and failed. Next, the OUC may determine whether the update engine (update engine) is performing merge or the merge has ended.

S508: The OUC determines whether the update engine (update engine) is performing merge. If merge is being performed, S509 is performed; or if no merge is being performed, S510 is performed.

In some embodiments, the OUC may obtain, by using a preset interface (for example, a cleanupsuccful interface), upgrade tracing point data generated by the update engine (update engine) in a merge process, to determine whether the update engine (update engine) is performing merge. If upgrade tracing point data can be obtained, the OUC can determine that the update engine is performing merge. If no upgrade tracing point data can be obtained, the OUC can determine that the update engine has ended merge. In this way, it can be conveniently determined whether the electronic device is performing a merge operation.

For example, a process in which the OUC obtains, by using the cleanupsuccful interface, the tracing point data generated by the update engine in the merge process may be understood as follows: The OUC monitors a location (also referred to as a target storage area), in the cache, to which the update engine writes the upgrade tracing point data in the merge process. If data exists in the location, or data in the location is changed, the OUC obtains the upgrade tracing point data from this location in the cache.

It can be learned from the foregoing analysis that, if the update engine is performing merge, the update engine outputs tracing point data in the cache, that is, upgrade tracing point data exists in the cache; or if the update engine has ended merge, the update engine exits, causing release of memory used by the update engine, that is, no upgrade tracing point data exists in the cache. Based on this, the OUC may determine, by obtaining upgrade tracing point data, whether the update engine (update engine) is performing merge.

In some embodiments, the OUC may also determine, by using data generated by the update engine (update engine) in a merge process, whether the update engine (update engine) is performing merge. In this way, it can also be conveniently determined whether the electronic device is performing a merge operation.

It can be understood that the update engine (update engine) generates some data (for example, an interface call record, temporary-file generation data, and file verification data) in a merge process. If the update engine (update engine) has ended the merge, the data is deleted by the update engine (update engine). Based on this, the OUC may determine, by searching for the data generated by the update engine (update engine) in the merge process (for example, the interface call record, the temporary-file generation data, and the file verification data), whether the update engine (update engine) is performing merge. For example, if the file verification data is obtained by searching, the OUC determines that the update engine (update engine) is performing merge. If no file verification data is obtained by searching, the OUC determines that the update engine (update engine) has ended merge.

In some embodiments, the OUC may also determine, by using data returned by a preset interface (for example, a running interface), whether the update engine (update engine) is performing merge. In this way, it can also be conveniently determined whether the electronic device is performing a merge operation.

In some other embodiments, the mobile phone may first determine whether the update engine (update engine) is performing merge, and then determine whether an upgrade result is obtained. In addition, alternatively, the mobile phone may simultaneously determine whether the update engine (update engine) is performing merge and whether an upgrade result is obtained.

For example, the OUC may obtain upgrade tracing point data and an upgrade result, and perform, based on an obtaining status (for example, whether the upgrade tracing point data is obtained and whether the upgrade result is obtained), a subsequent step corresponding to the obtaining status.

For example, a correspondence between an obtaining status and a subsequent step may be shown in the following Table 1.

**Table 1**

| Upgrade result | Upgrade tracing point data | Step to perform |
|---|---|---|
| Obtained | | S512 |
| Not obtained | Obtained | S509 |
| Not obtained | Not obtained | S510 |

S509: If the update engine is performing a merge operation, the OUC waits for the merge (merge) operation of the update engine (update engine) to complete; and if the update engine (update engine) performs the merge successfully, the OUC may obtain the upgrade result file generated by the update engine (update engine), and perform step S512; or if the update engine (update engine) fails to perform the merge, the OUC may perform step S510.

S510: The OUC instructs the update engine (update engine) to perform a merge (merge) operation.

In some embodiments, a trigger occasion at which the update engine (update engine) performs the merge operation may further include: receiving a merge indication. For example, in response to receiving a merge indication, the update engine performs a merge operation.

For example, the OUC may send a merge indication to the update engine (update engine), to trigger the update engine (update engine) to perform a merge operation.

In some embodiments, the OUC may also trigger, by using a system call, the update engine (update engine) to perform a merge operation (merge). For example, the OUC may send a merge start message to the system service (system server), and the system service (system server) sends a merge indication to the update engine in response to receiving the merge start message, so as to trigger the update engine (update engine) to perform a merge operation (merge).

In some other embodiments, another module on the mobile phone may also instruct the update engine (update engine) to perform a merge (merge) operation. For example, the system service instructs the update engine (update engine) to perform a merge (merge) operation.

It can be understood that because the update engine (update engine) is located at the native layer and the OUC is located at the application layer, the update engine (update engine) is located at a lower layer than the OUC. In other words, a start of the OUC is more complex than that of the update engine (update engine), and requires more resources (for example, processes and services on which the OUC relies). Therefore, a start time of the OUC is later than that of the update engine (update engine). In other words, after the mobile phone boots successfully from the static partition (B), the update engine (update engine) on the mobile phone is started before the OUC. In addition, since the OUC is probably not started before the update engine (update engine), and the update engine (update engine) performs a merge operation based on merge status information after being started, it can be learned that the update engine (update engine) may be performing the merge or may have ended the merge (for example, the merge succeeds or fails) when the OUC is started successfully.

In addition, since the update engine writes upgrade tracing point data to the cache, the cache is applied for by the update engine. Based on this, the merge process of the update engine ends, and the data in the cache is cleared. It can be learned that if the merge process of the update engine ends, the OUC cannot obtain the upgrade tracing point data. In addition, as cache space on the mobile phone is relatively valuable, the update engine uses later upgrade tracing point data to overwrite earlier upgrade tracing point data, so as to save the cache space. In other words, if the OUC is started and obtains the upgrade tracing point data from the cache in a process in which the update engine performs merge, the OUC may fail to obtain complete upgrade tracing point data.

To be specific, if the OUC obtains upgrade tracing point data in a process in which the update engine (update engine) performs the first merge (merge) operation, since the start time of the OUC is later than that of the update engine and later upgrade tracing point data overwrites earlier upgrade tracing point data in the process in which the update engine performs the merge, the OUC cannot obtain complete upgrade tracing point data. Based on this, if the update engine fails to perform a merge process (for example, the merge operation in the S509 fails), the OUC needs to re-instruct the update engine to start and perform a merge operation. In this way, the OUC obtains upgrade tracing point data throughout a process from starting to ending the merge by the update engine. As such, the OUC can obtain the upgrade tracing point data generated in the process in which the update engine performs complete merge. In addition, if the update engine successfully performs the second merge operation, the update engine generates an upgrade result file including upgrade success information.

It can be learned that the OUC is not started before the update engine (update engine) performs the merge. Moreover, in the process in which the update engine (update engine) performs the merge, the update engine (update engine) updates the upgrade tracing point data in the cache (cache). Based on this, when the update engine (update engine) performs the first merge (as in step S506b above), the OUC may fail to obtain the complete upgrade tracing point data from the cache. Therefore, the OUC needs to instruct the update engine (update engine) to perform a merge operation, so that the update engine (update engine) performs the second merge operation; and obtains upgrade tracing point data in a process in which the update engine (update engine) performs the merge operation. In this way, the OUC can obtain, from the cache, the complete upgrade tracing point data generated by the update engine (update engine).

S511: The OUC obtains upgrade tracing point data from a cache (cache) in a process in which the update engine (update engine) performs the merge (merge) operation.

In some embodiments, the merge operation performed in step S511 may be referred to as a second merge operation.

The merge (merge) operation performed by the update engine (update engine) in step S511 may be understood as the merge operation performed by the update engine (update engine) in step S509.

In the process in which the update engine (update engine) performs the merge (merge) operation, the upgrade tracing point data may be generated based on a tracing point and output by using the cache. The tracing point may include a preset tracing point and an extensible tracing point.

For example, it is assumed that a merge process of the update engine (update engine) includes: writing upgrade data (such as A2 and D2) in the COW file in the user data partition (userdata) to an address corresponding to the dynamic partition (super).

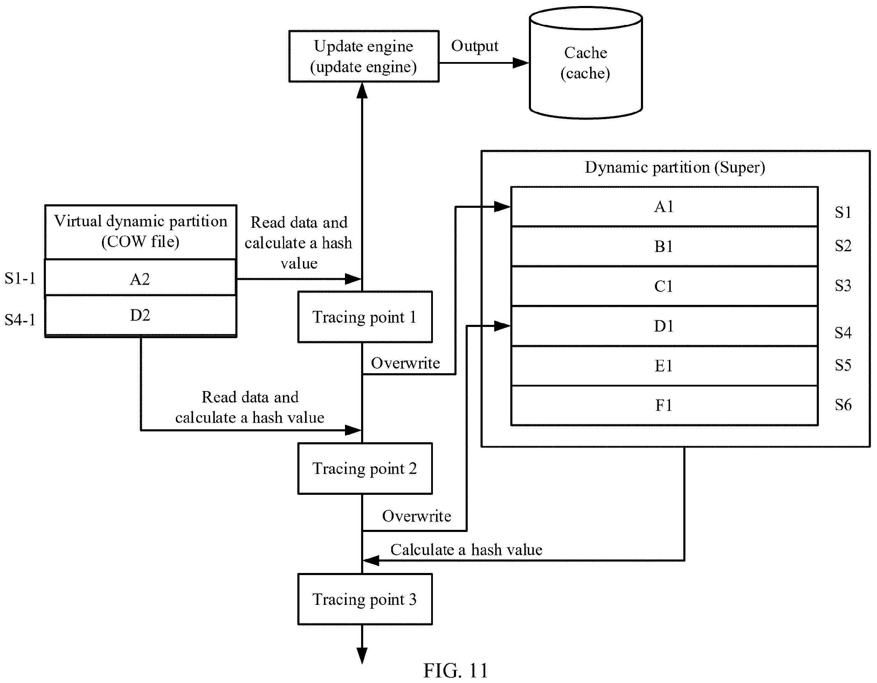

Referring to FIG. 11, the update engine (update engine) may first read A2 in the COW file, and calculate a hash value (such as hash_A2) of A2. After the calculation of the hash value of A2 is completed, the update engine runs to trace point 1, and the update engine writes the hash value of A2 to the cache as upgrade tracing point data. Then, the update engine writes A2 in the cow file to a location (for example, S1) corresponding to A2 in super.

Next, referring back to FIG. 11, after the update engine completes the writing of A2, the update engine reads D2 in the COW file and calculates a hash value (for example, hash_D2) of D2. After the calculation of the hash value of D2 is completed, the update engine runs to trace point 2, and writes the hash value of D2 to the cache as upgrade tracing point data. Then, the update engine writes D2 in the cow file to a location (for example, S4) corresponding to D2 in super.

Subsequently, referring to FIG. 11, after the update engine completes the writing of D2, the update engine calculates a hash value of an updated file in super. After the calculation of the hash value of the updated file is completed, the update engine runs to trace point 3, and the update engine reads the hash value (for example, hash_super) of the updated file in super above and writes the hash value of the updated file in super to the cache as upgrade tracing point data.

In this way, the update engine (update engine) can output tracing point data in the merge process. This enables a person skilled in the art to remedy the merge process of the update engine (update engine) of the mobile phone based on the tracing point data output in the merge process of the update engine (update engine).

For example, the OUC may obtain the upgrade tracing point data by using a preset interface (for example, the clean up succful interface). A process in which the OUC obtains, by using the clean up succful interface, the tracing point data generated by the update engine in the merge process may be understood as follows: The OUC monitors a location, in the cache, to which the update engine writes the upgrade tracing point data in the merge process. If data exists in the location, or data in the location is changed, the OUC downloads and stores the upgrade tracing point data from this location in the cache.

In this embodiment of this application, the OUC obtains the upgrade tracing point data directly from the cache. If a tracing point needs to be added in a merge process on the mobile phone, new tracing point data is generated when the update engine runs to the added tracing point in the merge process. In this way, the update engine can directly transfer the new upgrade tracing point data to the OUC by using the cache.

In some solutions, the update engine transfers new tracing point data to the OUC by using a file (for example, a system upgrade record file) as a medium. The update engine needs to perform format processing on the new tracing point data to meet a file format configuration requirement. Moreover, when the upgrade tracing point data is subsequently used, the upgrade tracing point data further needs to be obtained by parsing a file format. This may result in inconvenient extension and use of the upgrade tracing point data. However, in this solution, with the cache serving as a medium, no format processing needs to be performed on the upgrade tracing point data, and no file format configuration requirement needs to be met. As the update engine can transfer the new tracing point data to the OUC without performing format processing on the new tracing point data, the OUC obtains relatively raw data from the cache. In addition, when the upgrade tracing point data is subsequently used, there is no need to obtain the upgrade tracing point data by parsing a file format. The upgrade tracing point data obtained by the OUC from the cache can be directly used.

It can be learned that, according to the system upgrade information obtaining method provided in this embodiment of this application, the OUC obtains the upgrade tracing point data from the cache. This enables a tracing point to be easily added, and allows the system upgrade information (for example, the upgrade tracing point data) to be conveniently extended. In addition, as the upgrade tracing point data obtained by the OUC from the cache is relatively raw upgrade tracing point data, no file format requirement is imposed, the upgrade tracing point data can be obtained without parsing a formatted file, and subsequent use of the upgrade tracing point data is more convenient.

S512: The OUC stores the upgrade result file or the upgrade tracing point data.

In some embodiments, the OUC may further send the upgrade result file or the upgrade tracing point data to a server (for example, the foregoing package search server) that establishes a communication connection to the mobile phone. In this way, the server can learn an upgrade status of the mobile phone.

In some embodiments, if the OUC obtains the upgrade result file, the OUC may further present, based on the upgrade result file, an upgrade result corresponding to the upgrade result file. In this way, a user who uses the mobile phone can learn an upgrade status of an operating system of the mobile phone, thereby improving user experience.

For example, after the OUC obtains the upgrade result file, the OUC may parse content of the upgrade result file. If the upgrade result file includes upgrade success information, the OUC may prompt the user that the operating system upgrade succeeds. If the upgrade result file includes system rollback information, the OUC may prompt the user that the operating system upgrade fails and a system rollback occurs. In this way, the user can perceive the upgrade result of the operating system on the mobile phone, thereby improving user experience. A manner of prompting the user by the OUC includes but is not limited to: displaying a notification message, displaying a pop-up window, playing an alert sound, and the like.

In some embodiments, the OUC may remedy a merge process of the update engine based on the upgrade tracing point data. It is assumed that the upgrade tracing point data includes hash super above, and the OUC finds, by analyzing hash_super, that an updated value of super is incorrect. The OUC may send a modification package obtaining request to the package search server, to request the package search server to send a patch package for the super partition to the OUC. Then, after the OUC receives the patch package for the super partition, the OUC remedies the merge process based on the patch package for the super partition (for example, instructs the update engine to perform merge again based on the patch package for the super partition).

In some embodiments, the system upgrade information obtaining method provided in this embodiment of this application may further include step S513.

S513: The OUC sends the upgrade result file or the upgrade tracing point data.

In some embodiments, the OUC may send the upgrade result file to a server (for example, the package search server or the server of the vendor of the mobile phone). In this way, the server can obtain the upgrade result of the operating system on the mobile phone, and subsequently optimize an upgrade package based on the upgrade result of the operating system.

In some embodiments, the OUC may send the upgrade tracing point data to the server. In this way, the server can perform analysis based on the upgrade tracing point data to obtain a cause for a merge failure of the mobile phone, so as to remedy the merge process of the mobile phone, and complete the operating system upgrade of the mobile phone. For example, if the upgrade tracing point data includes hash_D2 above, the server finds, by analyzing hash_D2, that hash_D2 is different from correct hash_D2, that is, the D2 data is incorrect. The server may send another system patch package (the patch package includes correct D2 data) to the mobile phone. Then, the update engine on the mobile phone performs another merge process based on the system patch package. In this way, the server can remedy the merge process of the mobile phone.

In some embodiments, the OUC may further delete the upgrade tracing point data or the upgrade result file after sending the upgrade result file or the upgrade tracing point data. In this way, storage space of the OUC can be saved.

It should be noted that, according to the system upgrade information obtaining method provided in this embodiment of this application, a system upgrade record file may be stored in some embodiments, and may not be stored in some other embodiments. Whether a system upgrade record file in a related technology is stored is not limited in this embodiment of this application.

For example, the preset tracing point in this embodiment of this application may include one or more of the following: a partition copy failure (partitions copy fail) tracing point, an upgrade package inexistence (package not exist) tracing point, a verification (payload zip verify sign) tracing point, a parameter pre-settings non-conformance (invalid para) tracing point, a certificate pre-settings non-conformance (auth fail) tracing point, a partition update failure (table update fail) tracing point, a binary (binary) update failure (update by update binary fail) tracing point, and a download block hash (hash) verification in upgrade (download block hash mismatch) tracing point.

In addition, the extensible tracing point (new tracing point) may include one or more of the following: a read status (read status) tracing point, a merge table obtaining (get table info) tracing point, an unknown-table (unknown table) tracing point, an unknown-target-type (unknown target type) tracing point, an unmerged sectors after completion (unmerged sectors after completion) tracing point, and an unexpected merge state (unexpected merge state) tracing point.

In some embodiments, if the update engine (update engine) runs to the preset tracing point in a merge process, the update engine (update engine) suspends the merge process. Next, after the merge process is suspended, the update engine reads merge data (for example, parameter data and variable data) in the merge process, and determines whether the merge data belongs to an exception branch. If the merge data belongs to an exception branch, the update engine generates upgrade tracing point data based on the merge data, and stores the upgrade tracing point data in the cache (cache). If the merge data does not belong to an exception branch, no upgrade tracing point data is generated. For example, merge data that is of a non-exception branch (a normal branch) and that corresponds to each tracing point is configured in the update engine. If merge data read by the update engine is different from the merge data of the normal branch, the merge data read by the update engine is stored in the cache as upgrade tracing point data.

In this way, a data volume of the upgrade tracing point data generated by the update engine can be reduced. In addition, in this embodiment of this application, the upgrade tracing point data generated by the update engine is stored in the cache of the mobile phone. Therefore, reducing the data volume of the upgrade tracing point data generated by the update engine can reduce an occupancy of the cache on the mobile phone.

In some other embodiments, when the update engine (update engine) runs to a tracing point, determines that merge data belongs to an exception branch, and generates upgrade tracing point data, the update engine also generates a result (for example, referred to as an exception result) corresponding to the tracing point, and stores the exception result in the cache.

For example, it is assumed that the update engine (update engine) reads the COW file in the user data partition in a merge process; and subsequently, when the update engine runs to the foregoing upgrade package inexistence (package not exist) tracing point, the merge process of the update engine is suspended. If the update engine reads the COW file from the user data partition, and the update engine determines that the merge data (the COW file is read) belongs to a normal branch of the tracing point, the update engine does not generate upgrade tracing point data, and continues to execute a subsequent merge process. If the update engine does not read the COW file from the user data partition, and the update engine determines that the merge data (the COW file is not read) belongs to an exception branch of the tracing point, the update engine generates upgrade tracing point data, and continues to execute a subsequent merge process (for example, attempts to read the COW file again until the COW file is read).

For another example, it is assumed that in a merge process, the update engine (update engine) determines whether the COW file in the user data partition is merged into a corresponding location in the dynamic partition; and subsequently, when the update engine runs to the foregoing unexpected merge state (unexpected merge state) tracing point, the merge process of the update engine is suspended. The update engine compares the COW file in the user data partition with a file in a corresponding location (sub-partition) in the dynamic partition (for example, compares files in S1 and S1-1 in FIG. 10, or compares files in S4 and S4-1 in FIG. 10). If the comparison shows that the files of the two parties are different (for example, the files in S1 and S1-1 are different, or the files in S4 and S4-1 are different), the update engine determines that the merge data belongs to an exception branch of the tracing point, the update engine generates upgrade tracing point data, and continues to execute a subsequent merge process. If the comparison shows that the files of the two parties are the same, and the update engine determines that the merge data belongs to a normal branch of the tracing point, the update engine does not generate upgrade tracing point data, and continues to execute a subsequent merge process.

In the foregoing embodiment corresponding to FIG. 5A and FIG. 5B, the update engine searches for merge status information after being successfully started, and performs a merge operation based on the merge status information. However, in some scenarios, a trigger occasion at which the update engine performs a merge operation may not include successfully starting the update engine; and the trigger occasion at which the update engine performs a merge operation includes receiving a merge indication. In other words, in these scenarios, the update engine may not actively perform a merge operation after the update engine is successfully started, but the update engine may passively perform a merge operation (for example, the update engine performs a merge operation in response to receiving a merge indication).

This enables the OUC to obtain an upgrade result file or upgrade tracing point data when the update engine (update engine) performs merge once, and also makes an upgrade process of the operating system on the mobile phone relatively simple.

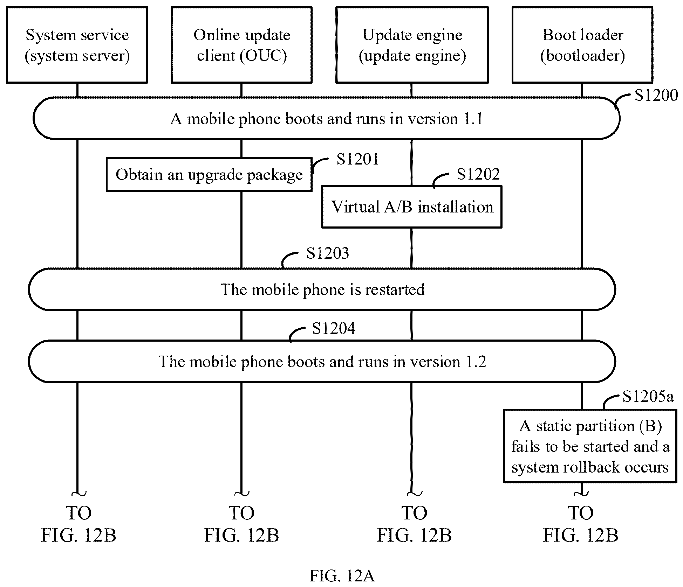

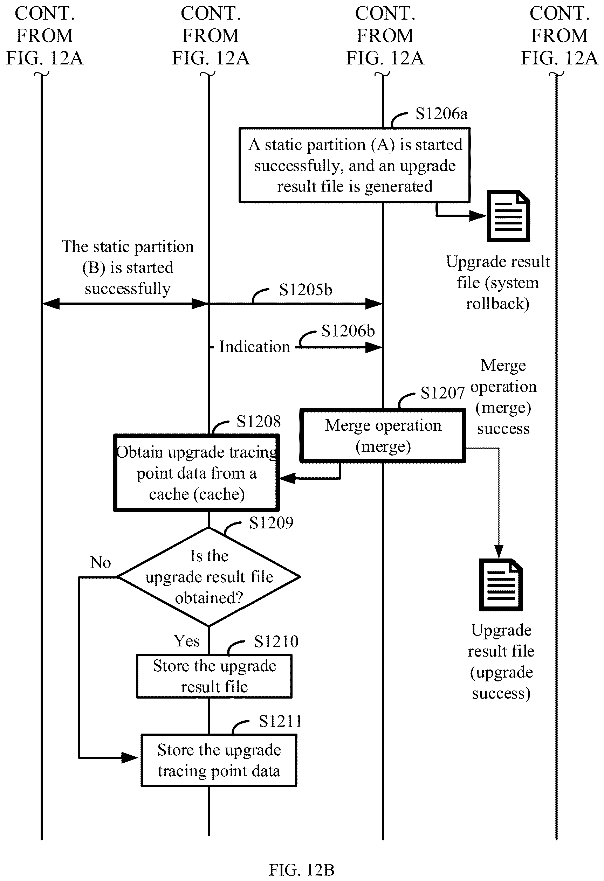

Specifically, referring to FIG. 12A and FIG. 12B, in this scenario, the system upgrade information obtaining method provided in this embodiment of this application may include steps S1200-S1211.

For steps S1200-S1204, refer to steps S500-S504. Details are not described herein again.

After step S1204, the mobile phone performs S1205a-1206a or performs S1205b-S1206b and a subsequent step.

Next, if the mobile phone fails to run in version 1.2, the mobile phone fails to start in a new system. The boot loader (bootloader) performs step S1205a to implement a system rollback. Then, after the system rollback occurs on the mobile phone, that is, after the mobile phone is successfully started in an old version (for example, version 1.1), the update engine (update engine) may perform S1206a to generate an upgrade result file including system rollback information. Specifically, for steps S1205a and S1206a, refer to the foregoing steps S505a and S506a.

S1205b: If the mobile phone is successfully started from the static partition (B), the system service (system server) starts the update engine (update engine) and the OUC.

If the mobile phone runs successfully in version 1.2, that is, the mobile phone boots successfully in a new system, the system service (system server) can start the update engine (update engine) and the OUC.

In this scenario, after being successfully started, the update engine (update engine) waits for a merge indication to perform a merge operation. In this way, the update engine (update engine) can perform one complete merge operation after the OUC is fully started. In this way, even if the OUC is started after the update engine (update engine), the update engine (update engine) may perform a complete merge process after the OUC is started, so that the OUC can obtain complete tracing point data generated by the update engine (update engine) in the merge process.

S1206b: The OUC instructs the update engine (update engine) to perform a merge operation, so as to trigger the update engine (update engine) to perform a merge operation (merge).

In some embodiments, the OUC may send a merge indication to the update engine (update engine) to trigger the update engine (update engine) to perform merge.

The merge indication may also be referred to as a merge instruction or the like. In some embodiments, the merge indication may be a preset character string. The OUC may send a merge indication to the update engine (update engine) by using a preset communication interface with the update engine (update engine).

In some embodiments, the OUC may also trigger, by using a system call, the update engine (update engine) to perform a merge operation (merge). For example, the OUC may send a merge start message to the system service (system server), and the system service (system server) sends a merge indication to the update engine in response to receiving the merge start message, so as to trigger the update engine (update engine) to perform a merge operation (merge).

In this way, in a process in which the update engine (update engine) performs a merge operation (merge), the OUC may obtain complete upgrade tracing point data of the update engine (update engine) in the process of performing the merge operation (merge).

S1207: If the update engine (update engine) receives an indication from the OUC, the update engine (update engine) performs a merge (merge) operation.

For example, in a process of performing the merge, the update engine (update engine) may output the upgrade tracing point data to the OUC based on a tracing point by using the cache as a medium. Specifically, for this step, refer to the foregoing steps S506b and S510. Details are not described herein again.

S1208: The OUC obtains upgrade tracing point data from a cache (cache) in a process in which the update engine (update engine) performs the merge operation (merge).

Specifically, for this step, refer to the foregoing step S511. Details are not described herein again.

S1209: After the merge performed by the update engine (update engine) ends, the OUC determines whether the upgrade result file is obtained. If the upgrade result file is obtained, step S1210 is performed. If the upgrade result file is not obtained, step S1211 is performed.

S1210: The OCU stores the upgrade result file and does not store the upgrade tracing point data.

S1211: The OCU stores the upgrade tracing point data.

In some scenarios, alternatively, the electronic device may perform a plurality of operating system upgrades, for example, an upgrade from the operating system of version 1.1 to the operating system of version 1.2, and then an upgrade from the operating system of version 1.2 to an operating system of version 1.3. It can be understood that a process of the upgrade from the operating system of version 1.2 to the operating system of version 1.3 is similar to the foregoing process of the upgrade from the operating system of version 1.1 to the operating system of version 1.2. For details, refer to the foregoing descriptions. Details are not described herein again.

The following describes the system upgrade information obtaining method provided in this embodiment of this application in a scenario with a plurality of operating system upgrades.

The electronic device runs a first operating system. Next, the electronic device runs an upgrade installation package of a second operating system. The first operating system is an operating system of version 1.1, and the second operating system is an operating system of version 1.2. For example, for this process, refer to related descriptions of steps S500-S502.

Then, the electronic device is powered off, and powered on subsequently. Next, the electronic device runs the second operating system. For example, for this process, refer to related descriptions of steps S503 and S504.

Later, the electronic device performs a first merge merge operation at a first time point.

Next, the electronic device performs the first merge operation successfully at a second time point. The second time point is later than the first time point.

Then, the electronic device starts an online update client OUC at a third time point. The third time point is later than the first time point.

Next, the electronic device runs an upgrade installation package of a third operating system. For example, for this process, refer to related descriptions of steps S500-S502.

Then, the electronic device is powered off, and powered on subsequently. Next, the electronic device runs the third operating system. For example, for this process, refer to related descriptions of steps S503 and S504. The third operating system may be an operating system of version 1.3.

Later, the electronic device performs a second merge operation at a fourth time point.

Then, the electronic device completes the second merge operation at a fifth time point, and the second merge operation fails. The fifth time point is later than the fourth time point. The OUC is fully started at a sixth time point. The sixth time point is later than the fourth time point.

Next, the electronic device performs a third merge operation at a seventh time point. The seventh time point is later than the sixth time point. Upgrade tracing point data may be generated based on a tracing point in a process in which the electronic device performs a merge operation. In addition, the foregoing merge operation (for example, the first merge operation, the second merge operation, or the third merge operation) may include: writing, to a dynamic partition of the electronic device, an upgrade file stored in a virtual dynamic partition (in a user data partition) of the electronic device.

In this embodiment, the OUC is started only after the second merge operation is performed. Given that the OUC may not be started when the electronic device performs the second merge operation, it is difficult for the OUC to obtain complete system upgrade information during the second merge operation. Based on this, after the OUC is started, the electronic device triggers execution of another merge operation, namely, the third merge operation, when the second merge operation fails. In this way, after the OUC is fully started, the electronic device can execute a complete merge operation process. Then, the OUC can obtain the complete system upgrade information (for example, the upgrade tracing point data) in the process of performing the merge, without parsing the file format and then obtaining the system upgrade information from a file. It can be learned that, in this manner, the system upgrade information can be obtained conveniently, efficiently, and directly.

In some other embodiments, this application further provides a system upgrade information obtaining method. In this method, an electronic device runs a fourth operating system. Next, the electronic device runs an upgrade installation package of a fifth operating system. Then, the electronic device is powered off, and powered on subsequently. Then, the electronic device runs the fifth operating system. For example, for this process, refer to related descriptions of steps S1200-S1204.

Later, the electronic device starts an online update client OUC at an eighth time point. For this process, refer to related descriptions of step S 1205b.

Next, in response to that the OUC is fully started, the electronic device performs a merge merge operation at a ninth time point. The ninth time point is later than the eighth time point. For this process, refer to related descriptions of step S 1206b.

In a process in which the electronic device performs a merge operation, the OUC obtains upgrade tracing point data from a cache. For this process, refer to related descriptions of step S1208.

It can be understood that, to implement the foregoing functions, the electronic device includes corresponding hardware and/or software modules for performing the functions. Algorithm steps in the examples described with reference to the embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions with reference to embodiments for each particular application, but it should not be considered that the implementation goes beyond the scope of this application.

In the embodiments, the electronic device may be divided into functional modules based on the foregoing method examples. For example, each functional module may be obtained through division for each corresponding function, or two or more functions may be integrated into one processing module. The integrated module may be implemented in a form of hardware. It should be noted that division into the modules in the embodiments is an example, and is merely logical function division. In actual implementation, there may be another division manner.

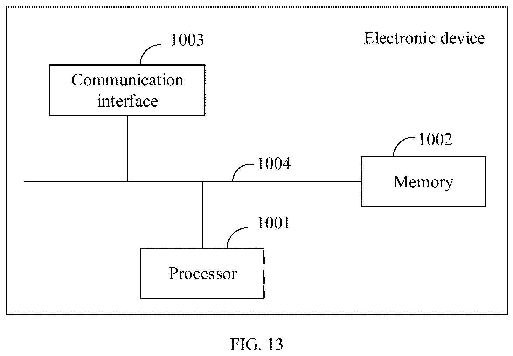

An embodiment of this application further provides an electronic device. As shown in FIG. 13, the electronic device may include one or more processors 1001, a memory 1002, and a communication interface 1003.

The memory 1002, the communication interface 1003, and the processor 1001 are coupled. For example, the memory 1002, the communication interface 1003, and the processor 1001 may be coupled together through a bus 1004.

The communication interface 1003 is configured to perform data transmission with another device. The memory 1002 stores computer program code. The computer program code includes computer instructions. When the computer instructions are executed by the processor 1001, the electronic device is enabled to perform device authentication in the embodiments of this application.

The processor 1001 may be a processor or a controller, for example, may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content of this disclosure. The processor may alternatively be a combination that implements a computing function, for example, a combination of one or more microprocessors or a combination of a DSP and a microprocessor.

The bus 1004 may be a peripheral component interconnect (peripheral component interconnect, PCI) bus, an extended industry standard architecture (extended industry standard architecture, EISA) bus, or the like. The bus 1004 may be classified into an address bus, a data bus, a control bus, and the like. For ease of representation, only one thick line is used for representation in FIG. 13, but this does not indicate that there is only one bus or one type of bus.

An embodiment of this application further provides a computer-readable storage medium. The computer storage medium stores computer program code. When the foregoing processor executes the computer program code, the electronic device performs the related method steps in the foregoing method embodiments.

An embodiment of this application further provides a computer program product. When the computer program product runs on a computer, the computer is enabled to perform the related method steps in the foregoing method embodiments.

The electronic device, the computer-readable storage medium, or the computer program product provided in this application is configured to perform the corresponding method provided above. Therefore, for beneficial effects that can be achieved by the electronic device, the computer-readable storage medium, or the computer program product, refer to the beneficial effects of the corresponding method provided above. Details are not described herein again.

It can be clearly learned by a person skilled in the art from the foregoing descriptions of the implementations that for convenience and brevity of description, only division into the foregoing functional modules is used as an example for description. In actual application, the foregoing functions may be allocated to different functional modules for implementation based on a requirement, in other words, an internal structure of an apparatus is divided into different functional modules, to complete all or some of the functions described above.

In the several embodiments provided in this application, it should be understood that the disclosed apparatus and method may be implemented in another manner. For example, the apparatus embodiments described above are merely examples. For example, division into modules or units is merely logical function division. In actual implementation, there may be another division manner. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may be one or more physical units, in other words, may be located in one place, or may be distributed in a plurality of different places. Some or all of the units may be selected based on an actual requirement to achieve the objectives of the solutions in the embodiments.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in the embodiments of this application essentially, or the part contributing to the technical solutions, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps in the method in the embodiments of this application. The storage medium includes various media that can store program code, for example, a USB flash disk, a removable hard disk, a read-only memory (read only memory, ROM), a random access memory (random access memory, RAM), a magnetic disk, or an optical disc.

The foregoing content is merely specific implementations of this application, but is not intended to limit the protection scope of this application. Any variation or replacement made within the technical scope disclosed in this application shall fall within the protection scope of this application. Therefore, the protection scope of this application shall be subject to the protection scope of the claims.

## Claims

1. A system upgrade information obtaining method, applied to an electronic device, wherein the method comprises:
in a process of running a first operating system, obtaining a first update package, and installing the first update package;
restarting the electronic device, and running a second operating system, wherein the second operating system is different from the first operating system;
performing a first merge operation at a first time point; wherein
the first merge operation ends at a second time point, and the first merge operation fails, wherein the second time point is later than the first time point;
starting a software upgrade service at a third time point, wherein the third time point is later than the second time point; and
performing a second merge operation at a fourth time point, wherein the fourth time point is later than the third time point.

2. The method according to claim 1, wherein the performing a second merge operation comprises:
performing the second merge operation based on the fact that the first merge operation has failed when the software upgrade service is started at the third time point.

3. The method according to claim 1 or 2, wherein after the fourth time point, the method further comprises:
obtaining a second update package, and installing the second update package;
restarting the electronic device, and running a third operating system, wherein the third operating system is different from the first operating system;
performing a third merge operation at a fifth time point, wherein the fifth time point is later than the fourth time point; and
starting the software upgrade service at a sixth time point, wherein the sixth time point is later than the fifth time point; wherein
the third merge operation ends at a seventh time point, wherein the seventh time point is later than the sixth time point.

4. The method according to claim 3, wherein the method further comprises:
based on the fact that the third merge operation has not ended when the software upgrade service is started at the fifth time point, skipping performing a merge operation after the third merge operation ends.

5. The method according to claim 3 or 4, wherein that the third merge operation ends comprises:
if the third merge operation ends and the third merge operation succeeds, an update engine in the electronic device generates an upgrade result file, wherein the upgrade result file is used to indicate an upgrade success, and the upgrade result file comprises no upgrade tracing point data; and
the software upgrade service obtains the upgrade result file.

6. The method according to any one of claims 3-5, wherein that the third merge operation ends further comprises:
if the third merge operation ends and the third merge operation fails, the software upgrade service obtains upgrade tracing point data from a cache.

7. The method according to any one of claims 1-6, wherein the method further comprises:
in a process of performing the second merge operation, obtaining, by the software upgrade service, upgrade tracing point data from a cache.

8. The method according to any one of claims 1-7, wherein the first operating system is run based on a first static partition; and the installing the first update package comprises:
updating a second static partition based on the first update package, wherein the second static partition is different from the first static partition.

9. The method according to claim 8, wherein the running a second operating system comprises:
if the second static partition is successfully loaded, running the second operating system; and
the method further comprises:
if the second static partition fails to be loaded, running the first operating system; wherein
the update engine generates an upgrade result file, and the software upgrade service obtains the upgrade result file; and the upgrade result file is used to indicate that an operating system rollback occurs, and the upgrade result file comprises no upgrade tracing point data.

10. An electronic device, wherein the electronic device comprises a processor and a memory, and the processor is configured to run computer instructions stored in the memory, so that the electronic device is enabled to perform the method according to any one of claims 1-9.

11. A computer-readable storage medium, comprising computer instructions, wherein when the computer instructions are run on an electronic device, the electronic device is enabled to perform the method according to any one of claims 1-9.
